# EUROPEAN PATENT APPLICATION

(11) **EP 4 734 048 A1**
(43) Date of publication of application: **29.04.2026**
(21) Application number: 24830761.3
(22) Date of filing: 25.06.2024
(51) Int. Cl.: G06T 7/00

(54) **SINGLE-CELL SPATIAL TRANSCRIPTOME ANALYSIS METHOD AND DEVICE BASED ON CELL SEGMENTATION**

(30) Priority: 25.06.2023 CN 202310752008; 25.06.2023 CN 202310752021; 25.06.2023 CN 202310752018; 26.06.2023 CN 202310758687
(71) Applicant: Bmkmanu Tech Co., Ltd, Qingdao, Shandong 266555 (CN)
(72) Inventor: ZHENG, Hongkun, Qingdao, Shandong 266555 (CN); LIU, Min, Qingdao, Shandong 266555 (CN); ZHANG, Menglong, Qingdao, Shandong 266555 (CN); OU, Yangfeng, Qingdao, Shandong 266555 (CN); QIN, Zhiyuan, Qingdao, Shandong 266555 (CN); DENG, Dejing, Qingdao, Shandong 266555 (CN)
(74) Representative: Delbarba, Andrea
(86) International application number: PCT/CN2024/101345
(87) International publication number: WO 2025/002121

(57) **Abstract**

The present application relates to the technical field of biological information. Provided are a method of analyzing cell segmentation-based single-cell spatial transcriptome and apparatus. The method includes: acquiring a corrected scanning image, where the scanning image is obtained based on a tissue slice attached to a biochip; performing cell segmentation on the scanning image to obtain a cell segmentation result; extracting, based on an inherent position of each barcode microsphere in the biochip, position information of the barcode microsphere corresponding to each cell in the cell segmentation result; and determining position information of each cell and the statistical information of the corresponding barcode microsphere based on the position information of the barcode microsphere corresponding to each cell in the cell segmentation result. The present application may improve the efficiency and accuracy of cell analysis.

## Description

### Cross-Reference to Related Application

This application claims priority to Chinese Patent Application No. 2023107520082 filed on June 25, 2023 and entitled "Cell Segmentation-Based Information Processing Method and Apparatus, and Device and Storage Medium", the application of which is hereby incorporated by reference in its entirety. This application claims priority to Chinese Patent Application No. 2023107586874 filed on June 26, 2023 and entitled "Scanning Image Correction Method and Apparatus, and Device", the application of which is hereby incorporated by reference in its entirety. This application claims priority to Chinese Patent Application No. 2023107520218 filed on June 25, 2023 and entitled "Scanning Image Processing Method and Apparatus, and Device", the application of which is hereby incorporated by reference in its entirety. This application claims priority to Chinese Patent Application No. 2023107520186 filed on June 25, 2023 and entitled "Method for Constructing Single-Cell Spatial Transcriptome Sequencing Library", the application of which is hereby incorporated by reference in its entirety.

### Technical Field

The present application relates to the technical field of biological information, and in particular, to a method of analyzing cell segmentation-based single-cell spatial transcriptome and apparatus.

### Background

With the development of computer vision and machine learning technologies, an increasing number of automated cell segmentation methods have been proposed and applied. These methods mainly include: edge detection, threshold segmentation, morphological operation, region growing, image segmentation, deep learning, etc.

However, the relevant technology fails to combine the cell segmentation results with the biochip containing barcode microspheres after cell segmentation, which prevents the acquisition of accurate position information of each cell and the statistical information of the corresponding barcode microsphere, resulting in poor efficiency and accuracy of cell analysis.

### Summary

In view of the problem of defects of poor efficiency and accuracy of cell analysis in the related art, an embodiment of the present application provides a method of analyzing cell segmentation-based single-cell spatial transcriptome and apparatus, so as to achieve the purpose of improving the efficiency and accuracy of cell analysis.

An embodiment of the present application provides a method of analyzing cell segmentation-based single-cell spatial transcriptome, including the following operations.

A corrected scanning image acquired, where the scanning image is obtained based on a tissue slice attached to a biochip.

Cell segmentation is performed on the scanning image to obtain a cell segmentation result.

Position information of the barcode microsphere corresponding to each cell in the cell segmentation result is extracted based on an inherent position of each of the barcode microspheres in the biochip.

Position information of each of the cells and the statistical information of the corresponding barcode microsphere are determined based on the position information of the barcode microsphere corresponding to each cell in the cell segmentation result.

Optionally, the cell segmentation result includes a cell nucleus boundary segmentation result and a cell boundary segmentation result. Performing cell segmentation on the scanning image to obtain the cell segmentation result includes the following operations.

The scanning image is split into a plurality of sub-images.

For each sub-image, the sub-image is preprocessed to obtain a target sub-image.

A pre-trained model matching a cell type of the tissue slice is acquired, and cell nucleus boundary segmentation result prediction is performed on the target sub-image with the pre-trained model, so as to obtain the cell nucleus boundary segmentation result of each of the cell nuclei in the target sub-image.

Each of the target sub-images is merged to obtain a target image.

The cell nucleus boundary segmentation result of each of the cell nuclei in each of the target sub-images is merged to obtain the cell nucleus boundary segmentation result of each of the cell nuclei in the target image.

External expansion processing is performed on the cell nucleus boundary segmentation result of each of the cell nuclei in the target image, so as to generate the cell nucleus boundary segmentation result of each cell in the target image.

Optionally, splitting the scanning image into a plurality of sub-images includes the following operations.

The scanning image is split into a plurality of initial sub-images with a customized sliding window.

Edge boundary line fine tuning is performed on the plurality of initial sub-images to obtain the plurality of sub-images.

Optionally, for each sub-image, preprocessing the sub-image to obtain the target sub-image includes the following operation.

For each sub-image, preprocessing including equalization, dimension adjustment, color space conversion, erosion, expansion, and pixel value normalization is performed on the sub-image, so as to obtain the target sub-image.

Optionally, performing external expansion processing on the cell nucleus boundary segmentation result of each of the cell nuclei in the target image, so as to generate the cell nucleus boundary segmentation result of each cell in the target image includes the following operations.

A binary image is generated based on the cell nucleus boundary segmentation result of each of the cell nuclei in the target image.
a distance map of the binary image is calculated through distance transform, where the distance map is configured to represent a distance from each pixel to the nearest cell nucleus boundary.

The distance map and a preset cell boundary threshold are processed with a watershed algorithm, so as to obtain the cell nucleus boundary segmentation result of each cell in the target image.

Optionally, extracting, based on the inherent position of each of the barcode microspheres in the biochip, the position information of the barcode microsphere corresponding to each cell in the cell segmentation result includes the following operations.

A center coordinate position of the barcode microsphere is calculated based on the inherent position of each barcode microsphere in the biochip.

A region of a corresponding position in cell data of the cell segmentation result is extracted based on the center coordinate position.

A circular mask is created, and the cell data in the region is multiplied by the circular mask, so as to obtain the cell data within a circular range.

The cell data within each of the circular ranges is statistically collected to obtain the position information of the barcode microsphere corresponding to each cell in the cell segmentation result.

Optionally, the method further includes the following operations.

Bioinformatics analysis is performed on the position information of each of the cells and the the statistical information of the corresponding barcode microspheres to obtain an expression level matrix of the cell corresponding to each piece of the position information.

Clustering processing is performed on the expression level matrices respectively corresponding to the cells, so as to obtain cell clustering information.

A corresponding color is drawn in a cell region corresponding to each clustering number in the scanning image based on clustering number of each of the cells in the cell clustering information, so as to obtain a clustering image; and Contour position information of each of the cells in the clustering image is generated by performing cell contour search on the clustering image.

Visualization display is performed on the clustering image and the contour position information of each of the cells in the clustering image.

Optionally, acquiring the corrected scanning image includes the following operations.

In a state where the tissue slice is attached to the biochip, the tissue slice is fixed with methanol, then bright-field staining is performed on a sample, and then scanning imaging is performed under a bright-field light source to obtain a plurality of field-of-view scanning images of the biochip, where the biochip includes a substrate pattern, the substrate pattern includes a plurality of key points, and an overlapping region exists between any adjacent field-of-view scanning images.

Fusion processing is performed on the plurality of field-of-view scanning images according to the overlapping region between any adjacent field-of-view scanning images, so as to obtain a full-size scanning image of the biochip.

First position information of the plurality of key points in the full-size scanning image is determined according to the substrate pattern.

Correction processing is performed on the full-size scanning image according to the first position information and the substrate pattern, so as to obtain a target full-size scanning image as the corrected scanning image.

Optionally, performing fusion processing on the plurality of field-of-view scanning images according to the overlapping region between any adjacent field-of-view scanning images, so as to obtain the full-size scanning image of the biochip includes the following operations.

A relative position between any adjacent field-of-view scanning images is determined according to the overlapping region between any adjacent field-of-view scanning images.

Fusion processing is performed on the plurality of field-of-view scanning images according to the relative position between any adjacent field-of-view scanning images, so as to obtain the full-size scanning image.

Optionally, determining the relative position between any adjacent field-of-view scanning images according to the overlapping region between any adjacent field-of-view scanning images includes the following operations.

For any first field-of-view scanning image among the plurality of field-of-view scanning images, a second field-of-view scanning image adjacent to the first field-of-view scanning image is determined.

Two-dimensional window sliding processing is performed on the first field-of-view scanning image and the second field-of-view scanning image according to an overlapping region between the first field-of-view scanning image and the second field-of-view scanning image, and a matching parameter between the first field-of-view scanning image and the second field-of-view scanning image is determined.

A relative position between the first field-of-view scanning image and the second field-of-view scanning image is determined according to the matching parameter.

Optionally, performing fusion processing on the plurality of field-of-view scanning images according to the relative position between any adjacent field-of-view scanning images, so as to obtain the full-size scanning image includes the following operations

A position of a reference field-of-view scanning image is determined among the plurality of field-of-view scanning images, where the reference field-of-view scanning image is any one of the plurality of field-of-view scanning images.

Positions of other field-of-view scanning images are determined according to the position of the reference field-of-view scanning image and the relative position between any adjacent field-of-view scanning images, where other field-of-view scanning images are field-of-view scanning images among the plurality of field-of-view scanning images other than the reference field-of-view scanning image.

Fusion processing is performed on the plurality of field-of-view scanning images according to the position of the reference field-of-view scanning image and the positions of other field-of-view scanning images, so as to obtain the full-size scanning image.

Optionally, determining first position information of the plurality of key points in the full-size scanning image according to the substrate pattern includes the following operations.

A key point identification model corresponding to the substrate pattern is determined.

The full-size scanning image is inputted to the key point identification model to obtain the first position information.

The key point identification model is obtained through training based on a plurality of groups of training samples, any one of the groups of training samples includes one sample full-size scanning image and label information corresponding to the sample full-size scanning image, the sample full-size scanning image includes the substrate pattern, and the label information includes position information of a plurality of key points in the sample full-size scanning image.

Optionally, performing correction processing on the full-size scanning image according to the first position information and the substrate pattern, so as to obtain the target full-size scanning image includes the following operations:
Second position information of the plurality of key points in the full-size scanning image is determined according to the substrate pattern and a dimension of the full-size scanning image.

Correction processing is performed on the full-size scanning image according to the first position information and the second position information, so as to obtain the target full-size scanning image.

Optionally, performing correction processing on the full-size scanning image according to the first position information and the second position information, so as to obtain the target full-size scanning image includes the following operations.

A correction conversion matrix is determined according to the first position information and the second position information.

Mapping transformation processing is performed on the full-size scanning image according to the correction conversion matrix, so as to obtain the target full-size scanning image.

Optionally, acquiring the corrected scanning image includes the following operations.

In a state where the tissue slice is attached to the biochip, the tissue slice is fixed with methanol, then fluorescence staining is performed on a sample, and then fluorescence scanning imaging is performed to obtain a plurality of bipartite mirror channel sub-images of the biochip and a fluorescence channel sub-image corresponding to each of the bipartite mirror channel sub-images.

Enlargement processing is performed on a substrate pattern included on the biochip according to scanning enlargement factors corresponding to the plurality of bipartite mirror channel sub-images, so as to obtain a full-size reference image.

A correction position of each of the bipartite mirror channel sub-images in the full-size reference image is determined according to a collection sequence of the plurality of bipartite mirror channel sub-images and a plurality of key points included in the substrate pattern.

Fusion processing is performed on the fluorescence channel sub-image corresponding to each of the bipartite mirror channel sub-images according to the correction position of each of the bipartite mirror channel sub-images in the full-size reference image, so as to obtain a full-size fluorescence image of the biochip as the corrected scanning image.

Optionally, determining the correction position of each of the bipartite mirror channel sub-images in the full-size reference image according to the collection sequence of the plurality of bipartite mirror channel sub-images and the plurality of key points included in the substrate pattern includes the following operations:
For any bipartite mirror channel sub-image, key point identification processing is performed on the bipartite mirror channel sub-image, and first coordinate information of a first key point in the bipartite mirror channel sub-image is determined, where the first key point is a key point that is among the plurality of key points and included in the bipartite mirror channel sub-image.

An initial position of the bipartite mirror channel sub-image in the full-size reference image is determined according to the collection sequence and the first coordinate information.

Correction processing is performed on the initial position to obtain the correction position of the bipartite mirror channel sub-image in the full-size reference image.

Optionally, performing key point identification processing on the bipartite mirror channel sub-image, and determining the first coordinate information of the first key point in the bipartite mirror channel sub-image includes the following operations.

The bipartite mirror channel sub-image is inputted to a key point identification model to obtain the first coordinate information.

The key point identification model is obtained through training based on a plurality of groups of training samples, any one of the groups of training samples includes one sample bipartite mirror channel sub-image and label information corresponding to the sample bipartite mirror channel sub-image, the sample bipartite mirror channel sub-image includes a sample key point, and the label information includes coordinate information of the sample key point in the sample bipartite mirror channel sub-image.

Optionally, determining the initial position of the bipartite mirror channel sub-image in the full-size reference image according to the collection sequence and the first coordinate information includes the following operations.

Second coordinate information of the first key point in the full-size reference image is determined according to the collection sequence.

An initial position of the bipartite mirror channel sub-image in the full-size reference image is determined according to the first coordinate information and the second coordinate information.

Optionally, performing correction processing on the initial position to obtain the correction position of the bipartite mirror channel sub-image in the full-size reference image includes the following operations.

A local sub-image corresponding to the bipartite mirror channel sub-image is determined from the full-size reference image according to the initial position, where a region corresponding to the local sub-image in the full-size reference image includes a region corresponding to the bipartite mirror channel sub-image in the full-size reference image.

The local sub-image and the bipartite mirror channel sub-image are matched to obtain a matching result.

The correction position of the bipartite mirror channel sub-image in the full-size reference image is obtained according to the matching result.

Optionally, matching the local sub-image and the bipartite mirror channel sub-image to obtain the matching result includes the following operations.

In a state where the local sub-image is in a fixed state, a plurality of relative positions of the bipartite mirror channel sub-image relative to the local sub-image are determined according to a preset step length.

Two-dimensional window sliding processing is performed on the bipartite mirror channel sub-image according to the plurality of relative positions, and the bipartite mirror channel sub-image under each of the relative positions is determined.

The local sub-image and the bipartite mirror channel sub-image under each of the relative positions are matched to obtain the matching result, where the matching result includes similarity between the bipartite mirror channel sub-image and the local sub-image under each of the relative positions.

Optionally, obtaining the correction position of the bipartite mirror channel sub-image in the full-size reference image according to the matching result includes the following operations.

The corresponding relative position with the highest similarity is determined as a target relative position of the bipartite mirror channel sub-image relative to the local sub-image.

The correction position of the bipartite mirror channel sub-image in the full-size reference image is obtained according to the target relative position and a position of the local sub-image in the full-size reference image.

Optionally, a single-cell spatial transcriptome sequencing library is configured to perform clustering processing, a tissue slice is a fresh-frozen tissue slice, and the biochip is a spatial transcriptome chip.

The single-cell spatial transcriptome sequencing library is constructed by the following steps.
(1) The fresh-frozen tissue slice is attached to the spatial transcriptome chip and fixed with methanol, then fluorescence staining is performed on a sample, then fluorescence scanning imaging is performed, and finally scanning imaging is performed under a bright-field light source, and obtaining a scanning image that is uncorrected by the single-cell spatial transcriptome.
(2) Tissue permeabilization is performed after scanning is completed.
(3) Reverse transcription and cDNA single-strand synthesis is performed.
(4) cDNA double-strand synthesis is performed.
(5) cDNA amplification is performed.
(6) cDNA purification is performed.
(7) cDNA quality control is performed.
(8) Loading sequencing is performed.

Optionally, for an animal sample, fluorescence staining is performed with DAPI or ssDNA in Step (1), and then fluorescence scanning imaging is performed; or fluorescence staining is performed with the DAPI or ssDNA, then fluorescence scanning imaging is performed, then HE staining or Masson staining is performed on the sample, and finally, scanning imaging is performed under the bright-field light source.

For a plant sample, spontaneous fluorescence-enhanced staining is performed with a fluorescent whitening agent 28 in Step (1); or methylamine blue or HE staining is directly performed without fluorescence staining.

Optionally, a thickness of the frozen tissue slice in Step (1) is 5-20 µm, and the attached chip is placed in -20 °C methanol and fixed for 30-60 min.

Optionally, the attached chip in Step (1) is fixed with the methanol, then a fluorescent staining reagent is added to the sample, incubation is performed in dark for 1-20 min, and then fluorescence scanning imaging is performed under irradiation of a full-spectrum or wide-spectrum light source.

Under a fluorescence channel, a filter block of a scanner is removed to reserve aa dichroic mirror only, a bipartite mirror is disposed, and cell nucleus fluorescence scanning and background microsphere matrix scanning are able to be implemented at the same time; or by disposing the filter block with certain transmittance, cell nucleus fluorescence scanning and background microsphere matrix scanning are implemented under a full-spectrum or wide-spectrum condition.

Optionally, Step (2) includes: the chip obtained in Step (1) is put in a tissue permeabilization solution for incubation for 1-30 min at 37 °C, the tissue permeabilization solution is removed, and a 0.1 % SSC solution is added to a well of the chip.

Optionally, Step (3) includes: the SSC solution in the well is removed, a reverse transcription and cDNA single-strand synthesis reagent is added to the well, and incubation is performed for 0.5-2 hours at 37-65 °C.

Optionally, Step (4) includes: the reverse transcription and cDNA single-strand synthesis reagent in the well is removed, 0.08M KOH is added for melting denaturation, then washing is performed with an EB buffer solution, then a cDNA double-strand synthesis reagent is added, and incubation is performed for 10-40 minutes at 45-70 °C.

Optionally, Step (5) includes: the cDNA double-strand synthesis reagent in the well is removed, the EB buffer solution is added for washing, then the 0.08M KOH is added for incubation for 10 min at room temperature, then the KOH is neutralized with Tris, and then a cDNA amplification reagent is added for PCR amplification.

Optionally, Step (6) includes: an amplification product is purified with a magnetic bead, then the magnetic bead is washed with 80% ethanol, and finally, the amplification product is eluted from the magnetic bead with the EB buffer solution.

Optionally, the spatial transcriptome chip used carries an mRNA capture probe; preferably, a S1000 spatial transcriptome chip is used.

An embodiment of the present application provides a cell segmentation-based single-cell spatial transcriptome analysis apparatus, including an acquisition module, a segmentation module, an extraction module, and a determination module.

The acquisition module is configured to acquire a corrected scanning image, where the scanning image is obtained based on a tissue slice attached to a biochip.

The segmentation module is configured to perform cell segmentation on the scanning image to obtain a cell segmentation result.

The extraction module is configured to extract, based on an inherent position of each of the barcode microspheres in the biochip, position information of the barcode microsphere corresponding to each cell in the cell segmentation result.

The determination module is configured to determine first position information of each of the cells and the statistical information of the corresponding barcode microsphere based on the position information of the barcode microsphere corresponding to each cell in the cell segmentation result.

An embodiment of the present application provides an electronic device, including a memory, a processor, and a computer program that is stored in the memory and executable on the processor. The processor, when executing the program, implements steps of any one of the above methods of analyzing cell segmentation-based single-cell spatial transcriptome.

An embodiment of the present application provides a non-transient computer readable storage medium, having a computer program stored thereon. The computer program, when executed by a processor, implements steps of any one of the above methods of analyzing cell segmentation-based single-cell spatial transcriptome.

According to the method of analyzing method of analyzing cell segmentation-based single-cell spatial transcriptome and apparatus provided in the embodiments of the present application, first, the corrected scanning image acquired, and the scanning image is obtained based on a tissue slice attached to a biochip, such that the accurate and corrected scanning image can be acquired before cell segmentation. Then, the cell segmentation is performed on the scanning image to obtain the cell segmentation result, and the position information of the barcode microsphere corresponding to each cell in the cell segmentation result is extracted based on the inherent position of each of the barcode microspheres in the biochip, such that the cell segmentation result can be combined with the biochip including the barcode microspheres, and the position information of the barcode microsphere corresponding to each cell is extracted. Finally, the position information of each of the cells and the the statistical information of the corresponding barcode microsphere are determined based on the position information of the barcode microsphere corresponding to each cell in the cell segmentation result, such that the accurate position information of each of the cells and the the statistical information of the corresponding barcode microsphere can be statistically collected based on the position information of the barcode microsphere corresponding to the single cell, thereby improving the efficiency and accuracy of cell analysis.

### Brief Description of the Drawings

In order to more clearly illustrate the embodiments of the present application or the technical solutions in the related art, the drawings used in the description of the embodiments or the related art will be briefly described below. It is apparent that the drawings in the following descriptions are some embodiments of the present application. Other drawings can be obtained from those skilled in the art according to these drawings without any creative work.
Figure 1 is a schematic flowchart of a method of analyzing cell segmentation-based single-cell spatial transcriptome according to an embodiment of the present application.
Figure 2 is a schematic diagram of a substrate pattern of a BMKMANU S1000 spatial transcriptome chip according to an embodiment of the present application.
Figure 3 is a schematic diagram of a corrected scanning image according to an embodiment of the present application.
Figure 4 is a schematic diagram of a cell nucleus boundary segmentation result according to an embodiment of the present application.
Figure 5 is a schematic diagram of a cell boundary segmentation result according to an embodiment of the present application.
Figure 6 is a schematic diagram of a clustering image according to an embodiment of the present application.
Figure 7 is a schematic flowchart of a scanning image correction method according to an embodiment of the present application.
Figure 8 is a schematic diagram of a substrate pattern according to an embodiment of the present application.
Figure 9 is a schematic diagram of an acquired field-of-view scanning image according to an embodiment of the present application.
Figure 10 is a schematic diagram of a field-of-view scanning image according to an embodiment of the present application.
Figure 11 is a schematic diagram of fusion processing according to an embodiment of the present application.
Figure 12 is a schematic diagram of a plurality of key points according to an embodiment of the present application.
Figure 13 is a schematic flowchart of fusion processing of a field-of-view scanning image according to an embodiment of the present application.
Figure 14 is a schematic flowchart of correction processing according to an embodiment of the present application.
Figure 15 is a schematic diagram of a target full-size scanning image according to an embodiment of the present application.
Figure 16 is a schematic enlarged view of a target full-size scanning image after a substrate pattern is superimposed according to an embodiment of the present application.
Figure 17 is a schematic flowchart of a scanning image processing method according to an embodiment of the present application.
Figure 18 is a comparison diagram of an efficiency effect of a bipartite mirror channel and a fluorescence channel according to an embodiment of the present application.
Figure 19 is a schematic diagram of enlargement processing of a substrate pattern according to an embodiment of the present application.
Figure 20 is a schematic flowchart of determination of a correction position of a bipartite mirror channel sub-image in a full-size reference image according to an embodiment of the present application.
Figure 21 is a schematic diagram of a full-size fluorescence image according to an embodiment of the present application.
Figure 22 is a schematic diagram of a fluorescence channel sub-image before and after fusion according to an embodiment of the present application.
Figure 23 is a schematic enlarged view of a full-size fluorescence image after a substrate pattern is superimposed according to an embodiment of the present application.
Figure 24 shows a cell segmentation result of animal tissue HE staining according to an embodiment of the present application.
Figure 25 is a seamless scanning effect diagram of toluidine blue staining of plant tissue according to an embodiment of the present application.
Figure 26 is a splicing effect diagram of toluidine blue staining of plant tissue according to an embodiment of the present application.
Figure 27 is a schematic flowchart of construction of a single-cell spatial transcriptome sequencing library according to an embodiment of the present application.
Figure 28 is a schematic structural diagram of a cell segmentation-based single-cell spatial transcriptome analysis apparatus according to an embodiment of the present application.
Figure 29 is a schematic structural diagram of an electronic device according to the present application.

### Detailed Description of the Embodiments

In order to make objectives, technical solutions, and advantages of embodiments of the present application clearer, the technical solutions in the embodiments of the present application will be clearly and completely described below in combination with the drawings in the embodiments of the present application. It is apparent that the described embodiments are only part of the embodiments of the present application, not all the embodiments. All other embodiments obtained by those of ordinary skill in the art based on the embodiments of the present application without creative efforts shall fall within the protection scope of the present application.

In order to facilitate a clear description of the technical solutions of the embodiments of the present application, in each embodiment of the present application, if terms such as "first", "second", etc. are used to distinguish between identical or similar items with essentially the same functions and roles, those skilled in the art may understand that the terms such as "first", "second", etc. do not impose any limitation on the number or order of execution.

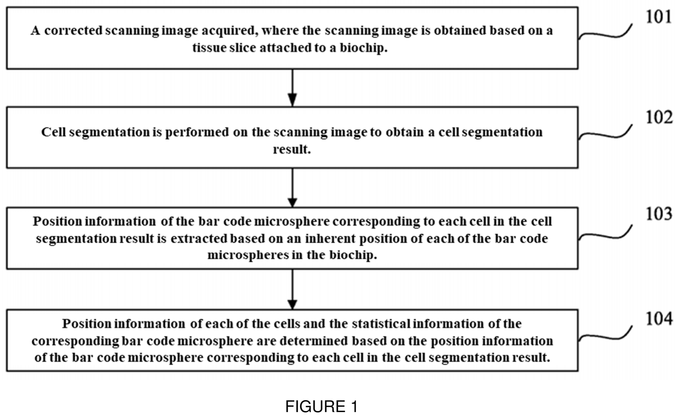

A method of analyzing cell segmentation-based single-cell spatial transcriptome provided in the embodiments of the present application is described below with reference to Figure 1 to Figure 34.

Referring to Figure 1, the Figure 1 is a schematic flowchart of a method of analyzing cell segmentation-based single-cell spatial transcriptome according to an embodiment of the present application. As shown in Figure 1, the method may include the following steps.

At S101, a corrected scanning image acquired, where the scanning image is obtained based on a tissue slice attached to a biochip.

At S102, cell segmentation is performed on the scanning image to obtain a cell segmentation result.

At S103, position information of the barcode microsphere corresponding to each cell in the cell segmentation result is extracted based on an inherent position of each of the barcode microspheres in the biochip.

At S104, position information of each of the cells and the statistical information of the corresponding barcode microsphere are determined based on the position information of the barcode microsphere corresponding to each cell in the cell segmentation result.

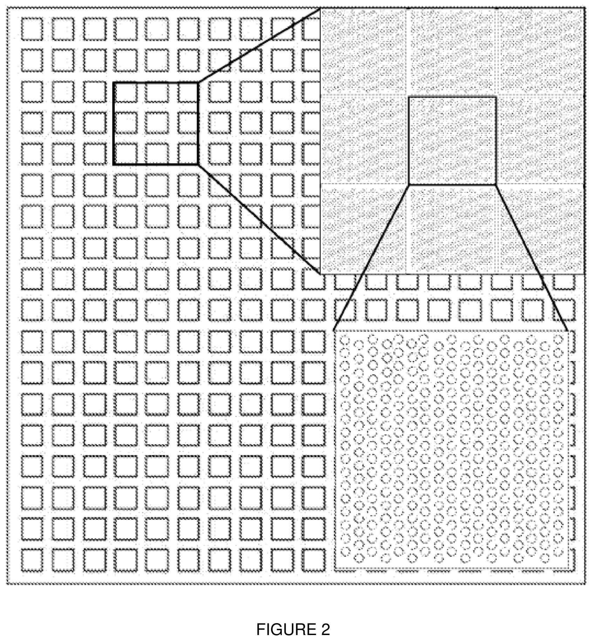

In S101, the biochip can be a spatial transcriptome chip or the like, such as a BMKMANU S1000 spatial transcriptome chip shown in Figure 2, and this embodiment is not limited thereto.

The tissue slice can be a tissue slice from a plant or a tissue slice from an animal. The tissue slice is attached to the biochip.

The scanning image can be a fluorescence scanning image or bright-field scanning image, and this embodiment is not limited thereto.

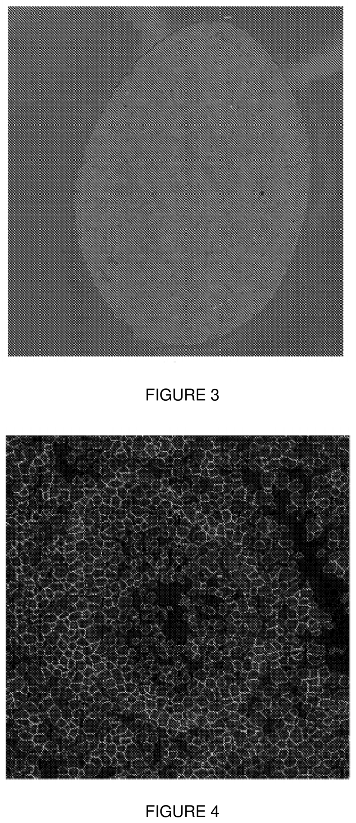

In an example involving a mouse testicular tissue slice, first, the plurality of scanning images are collected by a scanner; and then, the plurality of scanning images are spliced to obtain an initial scanning image. Since there is a system error in the scanner, the initial scanning image generally has the problems of misalignment, missing, overlapping, etc. Therefore, before cell segmentation, the initial scanning image needs to be corrected to obtain the corrected scanning image shown in Figure 3. There is no splicing error in the corrected scanning image, and the position of the image has been corrected to a correct substrate distribution, such that the corrected scanning image matches an actual situation.

In S102, cell segmentation refers to separation of the cell in the tissue slice from the background and other cells such that gene expression of each cell is accurately measured.

Specifically, each cell in the scanning image is separated from the background and other cells to obtain the cell segmentation result.

In S103, the biochip includes the barcode microsphere, and each cell in the cell segmentation result covers the plurality of barcode microspheres. The position information of the barcode microsphere covered under each cell can be searched based on the inherent position of each of the barcode microspheres in the biochip.

In S104, since the position information of the barcode microsphere covered by each cell is determined, the accurate position information of each cell, as well as the statistical information for each of the barcode microspheres covered under each cell, can be statistically collected.

According to the method of analyzing cell segmentation-based single-cell spatial transcriptome provided in the embodiments of the present application, first, the corrected scanning image acquired, and the scanning image is obtained based on a tissue slice attached to a biochip, such that the accurate and corrected scanning image canbe acquired before cell segmentation. Then, the cell segmentation is performed on the scanning image to obtain the cell segmentation result, and the position information of the barcode microsphere corresponding to each cell in the cell segmentation result is extracted based on the inherent position of each of the barcode microspheres in the biochip, such that the cell segmentation result can be combined with the biochip including the barcode microspheres, and the position information of the barcode microsphere corresponding to each cell is extracted. Finally, the position information of each of the cells and the the statistical information of the corresponding barcode microsphere are determined based on the position information of the barcode microsphere corresponding to each cell in the cell segmentation result, such that the accurate position information of each of the cells and the the statistical information of the corresponding barcode microsphere can be statistically collected based on the position information of the barcode microsphere corresponding to the single cell, thereby improving the efficiency and accuracy of cell analysis.

Based on the method of analyzing cell segmentation-based single-cell spatial transcriptome of the corresponding embodiment in Figure 1, the cell segmentation result includes a cell nucleus boundary segmentation result and a cell boundary segmentation result. S102 includes the following sub-steps.

At S1021, the scanning image is split into a plurality of sub-images.

At S1022, for each sub-image, the sub-image is preprocessed to obtain a target sub-image.

At S1023, a pre-trained model matching a cell type of the tissue slice is acquired, and cell nucleus boundary segmentation result prediction is performed on the target sub-image with the pre-trained model, so as to obtain the cell nucleus boundary segmentation result of each of the cell nuclei in the target sub-image.

At S1024, each of the target sub-images is merged to obtain a target image.

At S1025, the cell nucleus boundary segmentation result of each of the cell nuclei in each of the target sub-images is merged to obtain the cell nucleus boundary segmentation result of each of the cell nuclei in the target image.

At S1026, external expansion processing is performed on the cell nucleus boundary segmentation result of each of the cell nuclei in the target image, so as to generate the cell nucleus boundary segmentation result of each cell in the target image.

In S1021, due to the too large dimension of the scanning image, the scanning image needs to be split into the plurality of sub-images with appropriate dimensions. The appropriate dimension is pre-configured according to a display screen parameter of a current device.

In a possible implementation, the scanning image is split into a plurality of initial sub-images with a customized sliding window; and edge boundary line fine tuning is performed on the plurality of initial sub-images to obtain the plurality of sub-images.

Specifically, the customized sliding window is used, according to a sequence from left to right and top to bottom, an upper left corner (0, 0) of the image is used as an original point, segmentation starts to be performed in a sliding manner, until the scanning image is completely segmented into the plurality of initial sub-images. These initial sub-images have no overlapping portions after segmentation, and can be completely recovered to an original image before splitting. Since edge boundary lines of the uniformly-segmented initial sub-images may separate the single complete cell, edge boundary line fine tuning can be performed on the plurality of initial sub-images through an offset operation, so as to obtain the plurality of sub-images.

A first loop of loop nesting traverses a vertical direction of the image through a y_start variable, and a step length for each iteration is self.sub_size[0]-self.overlap[0]; and a second loop of loop nesting traverses a horizontal direction of the image through an x_start variable, and a step length for each iteration is self.sub_size[1]-self.overlap[1]. Through a slicing operation, vertical and horizontal slicing ranges of the current sub-image are acquired according to the y_start and the x_start. According to the slicing ranges, a binarization mask tmp_mask of the current sub-image is extracted from cell_mask. The current sub-image img_sub is extracted from an original image img. A copy tmp_img of the current sub-image is created to prevent the original image from being modified. Regions that already exist in the mask are set to 0 in the current sub-image, such that these regions do not participate in cell segmentation calculation. Cell segmentation is performed on the current sub-image by calling a model.eval() function. Input parameters include the current sub-image (tmp_img), a cell diameter, the number of channels, and a flow field threshold. A mask (mask_sub) is acquired from the segmentation result, and an edge portion is removed. The tmp_mask is updated according to a value of the mask (mask_sub), and a corresponding position is set to True. a cell contour is generated according to the mask (mask_sub).

In this implementation, sub-image segmentation and fine tuning are performed with the customized sliding window, such that the efficiency and accuracy of sub-image segmentation can be improved.

In S1022, in order to improve image quality, highlight or emphasize specific information in the image, and weaken interference information, preprocessing is performed on each sub-image to obtain the target sub-image, which may better adapt to subsequent image processing or analysis tasks.

In a possible implementation, for each sub-image, preprocessing including equalization, dimension adjustment, color space conversion, erosion, expansion, and pixel value normalization is performed on the sub-image, so as to obtain the target sub-image.

Specifically, preprocessing may include the following content.

### 1) Equalization

The pixel distribution of the sub-image is adjusted through methods such as histogram equalization, causing the brightness or color of the sub-image to be more equalized, such that the visual effect and feature expression of the image can be improved.

### 2) Dimension adjustment

The dimension of the sub-image is adjusted, causing the sub-image to conform to a specific requirement or adapt to a specific processing algorithm or model.

### 3) Color space conversion

The sub-image is converted from one color space to another color space, for example, an RGB image is converted into a grayscale image or other color space image, so as to meet different analysis requirements.

### 4) Erosion and expansion

Erosion and expansion are performed on the sub-image, such that an impact on the pre-trained model by the barcode microsphere under the tissue slice in the sub-image can be weakened.

### 5) Pixel value normalization

A pixel value of the sub-image is adjusted within a normalization range, such that a misidentification phenomenon caused by excessive brightness or darkness can be avoided.

In this implementation, by performing preprocessing including equalization, dimension adjustment, color space conversion, erosion, expansion, and pixel value normalization is performed on the sub-image, image quality can be improved, specific information in the image can be highlighted or emphasized, and interference information can be weakened, thereby better adapting to subsequent image processing or analysis tasks.

In S1023, before cell segmentation, a pre-trained model corresponding to an animal cell can be trained based on a sample carrying an animal cell label, and a pre-trained model corresponding to a plant cell can be trained based on a sample carrying a plant cell label.

In an example of using a mouse testicular tissue slice, a pre-trained model matching a cell type of the mouse testicular tissue slice is loaded with an open-source cell segmentation algorithm cellpose. Cell nucleus boundary segmentation result prediction is performed on the target sub-image with the pre-trained model, so as to obtain the cell nucleus boundary segmentation result of each of the cell nuclei in the target sub-image shown in Figure 4.

Specifically, cell nucleus boundary segmentation result prediction can be performed on the target sub-image by invoking the model.eval () function, and the input parameters of the model.eval () function may include: the current target sub-image tmp_img, the cell diameter, the number of channels, and the flow field threshold.

In order to better adapt to the characteristics of each type of cells, this step provides a plurality of segmentation parameters such as a cell diameter dimension (diameter), a segmentation color channel (seg_channel), color inversion (inversion), and a recognition threshold (flow_threshold). Different types of cells under different staining can be adapted by providing a plurality of segmentation parameter options.

In an example of using the cell diameter dimension as 35 pixels, with the segmentation color channel as 0RED 1GREEN 2BLUE, and the target sub-image as img_dist_fg7.tif, a specified picture and a customized segmentation parameter are inputted through a command "python SegtoBarcode.py--img_path'./img_dist_fg7.tif'--diameter35--inversion True--seg_channel 1". Other customized parameters can be inputted through a command line, or may also modify a setup.yaml configuration file.

In S1024 and S1025, all the target sub-images and the corresponding cell nucleus boundary segmentation results are merged to obtain the target image and the cell nucleus boundary segmentation result of each of the cell nuclei in the target image.

An int32-type original image dimension npy matrix file is created as a storage structure of the cell nucleus boundary segmentation result, such that pixel-level point-to-point correspondence can be ensured. Furthermore, the int32 type can store more data information, thereby preventing the number of the cells counted from exceeding an upper limit of data types.

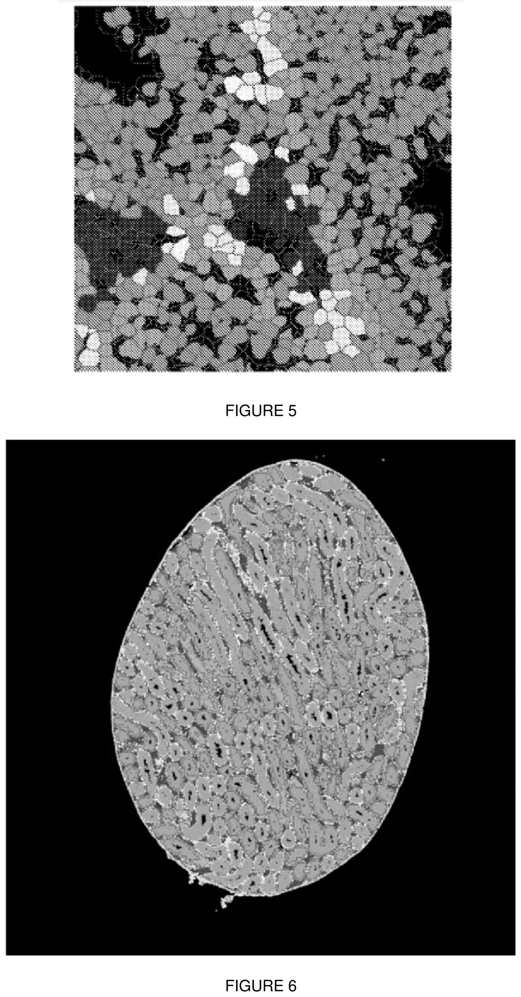

In S1026, the cell nucleus boundary segmentation result of each cell nucleus in the target image is externally expanded within a specified range, and then the cell nucleus boundary segmentation result of each cell in the target image shown in Figure 5 can be generated.

In a possible implementation, S1026 may include: a binary image is generated based on the cell nucleus boundary segmentation result of each of the cell nuclei in the target image; a distance map of the binary image is calculated through distance transform, where the distance map is configured to represent a distance from each pixel to the nearest cell nucleus boundary; and the distance map and a preset cell boundary threshold are processed with a watershed algorithm, so as to obtain the cell nucleus boundary segmentation result of each cell in the target image.

Specifically, first, a nucleus mask file (nucleus.npy) is loaded with a Numpy.load function, and is subjected to zoom processing. A zoom ratio is 1/self.calculate_rate, and is implemented by a Ndimage.zoom function. A zoomed result is stored in mask_rs. A pixel value greater than 0 in mask_rs is set to 255, and the rest are set to 0, so as to obtain the binary image of the cell nucleus. This can be implemented through Numpy.where function and type conversion. A distance map of a cell nucleus boundary is calculated with distance transform (Ndimage.distance_transform_edt). The distance map represents a distance from each pixel to the nearest cell nucleus boundary. The cell segmentation result is generated according to a set cell edge threshold (self.cell_edge) and the zoom ratio (self.calculate_rate). The watershed algorithm is performed with a watershed function, where the distance map is used as an input, and a nucleus mask (mask_rs) is used as a mark. The cell segmentation result is converted into a cell segmentation boundary with a cellpose.utils.masks_to_outlines function. A mask including the cell segmentation boundary is obtained. The cell segmentation result (cells) is zoomed, causing its dimension to be consistent with that of an original nucleus mask (masks). Herein, a Ndimage.zoom function and a demensional proportion are used for calculation. The cell segmentation result (cells) is saved as a cells.npy file, and the file path is located in a self.save_dir directory. The original nucleus mask (masks), the cell segmentation result (cells), and a save path (cells_path) for the cell segmentation result are returned. The algorithm is intended to generate the cell segmentation result from the nucleus mask, extract the cell boundary through distance transform and the watershed algorithm, and save the result for later use.

In this embodiment, the convenience and efficiency of cell segmentation can be achieved.

Based on the method of analyzing cell segmentation-based single-cell spatial transcriptome corresponding to the foregoing embodiments, S103 may include: a center coordinate position of the barcode microsphere is calculated based on the inherent position of each barcode microsphere in the biochip; a region of a corresponding position in cell data of the cell segmentation result is extracted based on the center coordinate position; a circular mask is created, and the cell data in the region is multiplied by the circular mask, so as to obtain the cell data within a circular range; and the cell data within each of the circular ranges is statistically collected to obtain the position information of the barcode microsphere corresponding to each cell in the cell segmentation result.

Specifically, a barcode template is loaded to read the inherent position of each barcode microsphere in the biochip. The cell data is loaded to calculate an enlargement ratio (zoom_scale) of the image. A standard width (std_w) and a standard height (std_h) are calculated according to the enlargement ratio. A radius is initialized as half of 0.618 times the standard width, and if the radius is less than 1, the radius is set to 1. The inherent position of each of the barcode microspheres in the biochip is traversed, and the center coordinate position of each barcode microsphere is calculated. The region of the corresponding position in the cell data is extracted according to the center coordinate position. The circular mask is created, and the cell data in the region is multiplied by the mask, so as to obtain the cell data within the circular range. The cell data within each of the circular ranges is statistically collected to obtain the position information of the barcode microsphere corresponding to each cell, and the position information is added to an all_barcode list. The all_barcode list is traversed, a barcode microsphere name and the corresponding cell data are written to an all_barcode_txt list, and content in the all_barcode_txt list is saved in a file all_barcode_num.txt.

In this embodiment, the cell segmentation result and the biochip including the barcode microsphere can be combined, and the position information of the barcode microsphere corresponding to each cell is extracted, thereby accurately positioning and identifying each cell.

Based on the method of analyzing cell segmentation-based single-cell spatial transcriptome corresponding to the foregoing embodiments, the method further includes the following steps.

At S105, bioinformatics analysis is performed on the position information of each of the cells and the statistical information of the corresponding barcode microspheres to obtain an expression level matrix of the cell corresponding to each piece of the position information.

At S106, clustering processing is performed on the expression level matrices respectively corresponding to the cells, so as to obtain cell clustering information.

At S107, a corresponding color is drawn in a cell region corresponding to each clustering number in the scanning image based on clustering number of each of the cells in the cell clustering information, so as to obtain a clustering image.

At S108, contour position information of each of the cells in the clustering image is generated by performing cell contour search on the clustering image.

At S109, visualization display is performed on the clustering image and the contour position information of each of the cells in the clustering image.

In S106, a clustering dictionary is defined, and a clustering number and a color number are mapped. Clustering processing is performed on the expression level matrices respectively corresponding to the cells, so as to obtain the clustering numbers, and the corresponding color numbers are acquired according to the clustering dictionary. An array cell_color configured to store the cell color numbers is created, and the corresponding color number is assigned to a corresponding position in the cell_color array.

In S107, color information is loaded, and if a previously-saved color file is present, a previously saved color is loaded, otherwise a group of colors are randomly generated and saved. The corresponding color is drawn in the cell region corresponding to each clustering number in the scanning image, so as to obtain the clustering image shown in Figure 6, and the clustering image is saved to a specified directory. When the color is drawn, the color in the cell nucleus is different from the color of the region between the cell nucleus boundaries.

In S107, regarding cell contour search, the cell boundary is extracted from the cell segmentation result, and boundary coordinates are saved as a JSON file.

Specifically, first, the cell segmentation result (cells_path) is loaded with the Numpy.load function, and stored in the masks. An empty dictionary cell_contours is created and configured to store the boundary coordinates of each cell. The position of each cell in the masks is searched with a Ndimage.find_objects function. A list slices consisting of tissue slices is returned. For each non-empty tissue slice si, a corresponding row index sr and a corresponding column index sc are extracted. A binarization mask is created, a pixel value belonging to the current cell is set to 1, and the remaining pixel values are set to 0. This is implemented by comparing masks[sr,sc] with (i+1). The contour of the binarization mask is found with a cv2.findContours function, and a returned result is contours. Point coordinates pvc and pvr of the contour are extracted, and offset according to an initial position of the tissue slice, so as to obtain absolute coordinates vr and vc relative to the original image. A cell label and corresponding boundary coordinates are added to a cell_contours dictionary, a key is the cell label, and a value is the list including the boundary coordinates. The cell_contours dictionary is saved in a specified file in a JSON format, and a file path is json_name.json located in a save_dir directory. The cell_contours dictionary is returned. The boundary coordinates of each cell can be extracted from the cell segmentation result, and saved as the JSON file for later use.

In S109, visualization display is performed on the contour position information of each of the cells in the clustering image in the JSON format, and the clustering image is displayed on a visual interface, such that the distribution of different types of cells can be clearly displayed.

In this embodiment, the clustering image and the contour position information of each of the cells in the clustering image can be obtained through bioinformatics analysis, clustering processing, and cell contour search, facilitating visualization display.

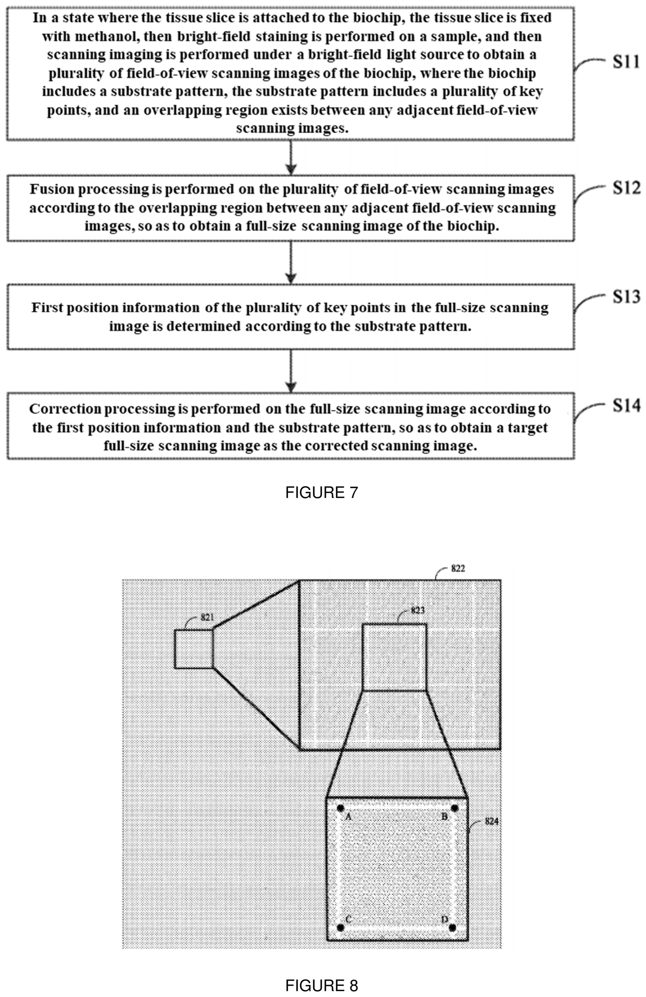

Optionally, for the correction of the bright-field scanning image, as shown in Figure 7, S101 may include the following steps.

At S11, in a state where the tissue slice is attached to the biochip, the tissue slice is fixed with methanol, then bright-field staining is performed on a sample, and then scanning imaging is performed under a bright-field light source to obtain a plurality of field-of-view scanning images of the biochip, where the biochip includes a substrate pattern, the substrate pattern includes a plurality of key points, and an overlapping region exists between any adjacent field-of-view scanning images.

The tissue slice is a slice that is manufactured based on biological tissue, for example, may be a pathological tissue slice. After the tissue slice is obtained, the tissue slice is attached to the biochip according to a professional slicing process, then a corresponding reagent is used for processing, and the tissue slice is fixed for scanning.

The biochip is an apparatus that is configured to capture gene expression information of the cell. A specific substrate pattern is carried on the biochip, and the substrate patterns on different biochips may be the same or different. The substrate pattern includes, but is not limited to, a circular array, a square array, etc.

Figure 8 is a schematic diagram of a substrate pattern according to an embodiment of the present application. As shown in Figure 8, the biochip includes the substrate pattern. In Figure 8, a region 821 of the biochip is exemplified as a region 822 after enlargement, and a sub-region 823 in the region 822 is exemplified as a region 824 after enlargement. It is to be noted that, the above enlargement process means that enlargement observation can be performed in a microscopic manner, and does not indicate physical enlargement.

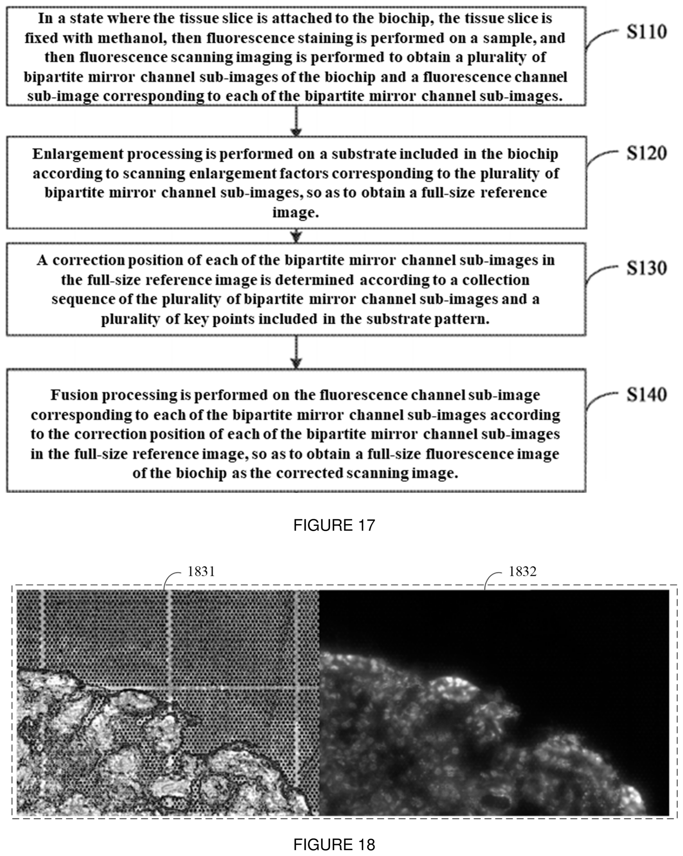

In Figure 8, it can be seen that the biochip includes horizontal and vertical lines, and these lines together constitute the substrate pattern on the biochip. It is to be noted that, the substrate pattern on the biochip 1820 in Figure 18 is only an example. The substrate pattern on the biochip in the embodiments of the present application can be designed according to requirements, and this embodiment is not limited thereto.

The substrate pattern includes a plurality of key points. The number of the plurality of key points can be set according to requirements, and the positions of the key points in the substrate pattern can also be designed according to requirements. For example, in Figure 8, intersection points of the horizontal and vertical lines are used as the key points in the substrate pattern. Point A, Point B, Point C, and Point D in Figure 8 are all key points in the substrate pattern.

The biochip includes a plurality of biological barcodes, and the biological barcodes can also be referred to as barcoad points, DNA barcodes, etc. In Figure 8, small dots shown in the sub-region 824 are the biological barcodes in the biochip.

The biological barcode is configured to capture gene expression information of the cell. In the embodiments of the present application, the biological barcode on the biochip is configured to capture the gene expression information of each of the cells in the tissue slice. Before the tissue slice is attached to the biochip, the biological barcode on the biochip has captured the gene expression information of each of the cells in the tissue slice.

After the tissue slice is attached to the biochip and fixed, the plurality of field-of-view scanning images of the biochip can be collected. Different field-of-view scanning images have different fields of view. The field of view of any field-of-view scanning image is one local region of the biochip. The fields of view of the plurality of field-of-view scanning images together constitutes the global region of the entire biochip, and there is an overlapping region between any adjacent field-of-view scanning images.

Specifically, after the tissue slice is attached to the biochip and fixed, a professional scanner is controlled to scan the tissue slice to obtain the plurality of field-of-view scanning images. During scanning, the position of the scanner changes accordingly, and during the changing of the position of the scanner, the field of view of the field-of-view scanning image obtained through scanning changes accordingly. Optionally, the field-of-view scanning image belongs to a bright-field digital microscopic scanning image.

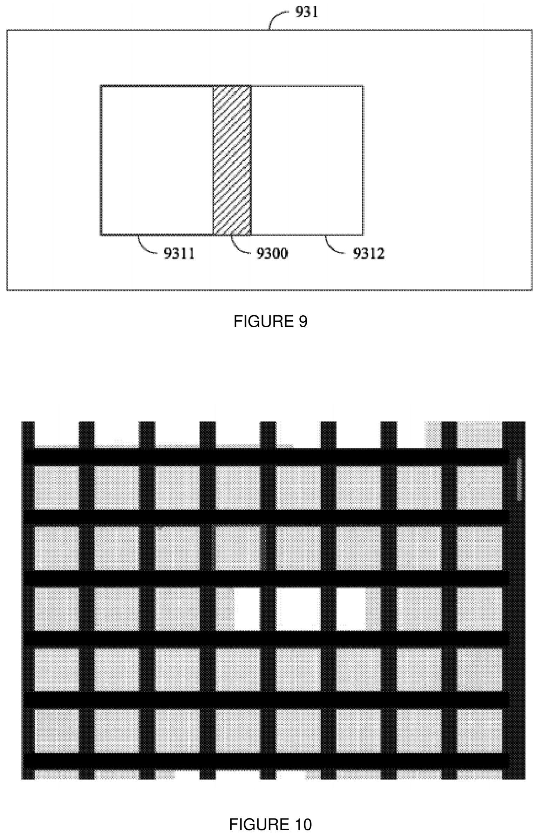

An implementation process that the scanner scans the tissue slice is exemplarily introduced below with reference to Figure 9.

Figure 9 is a schematic diagram of an acquired field-of-view scanning image according to an embodiment of the present application. As shown in Figure 9, the biochip 931 and the scanner (not shown in the figure) are included.

At the beginning, the scanner scans a local region 9311 in the biochip 931 to obtain a field-of-view scanning image corresponding to the local region 9311, then the scanner moves its position to scan a local region 9312 in the biochip 931 to obtain a field-of-view scanning image corresponding to the local region 9312, and so on. The local region 9311 is adjacent to the local region 9312, and there is an overlapping region 9300 between the field-of-view scanning image corresponding to the local region 9311 and the field-of-view scanning image corresponding to the local region 9312.

A scanning sequence of the scanner can be preset, the scanner scans different local regions in the biochip 931 according to the preset scanning sequence, so as to obtain the corresponding field-of-view scanning image.

At S12, fusion processing is performed on the plurality of field-of-view scanning images according to the overlapping region between any adjacent field-of-view scanning images, so as to obtain a full-size scanning image of the biochip.

Figure 10 is a schematic diagram of a field-of-view scanning image according to an embodiment of the present application. As shown in Figure 10, the plurality of field-of-view scanning images can be obtained after the scanner scans, then the plurality of field-of-view scanning images can be re-arranged according to the scanning sequence of the scanner, and the positions of the field-of-view scanning images correspond to actual space positions on the biochip according to position numbers.

For any adjacent two field-of-view scanning images among the plurality of field-of-view scanning images, since there is the overlapping region between the two field-of-view scanning images, fusion processing can be performed on the two field-of-view scanning images according to the overlapping region, so as to obtain the fused image.

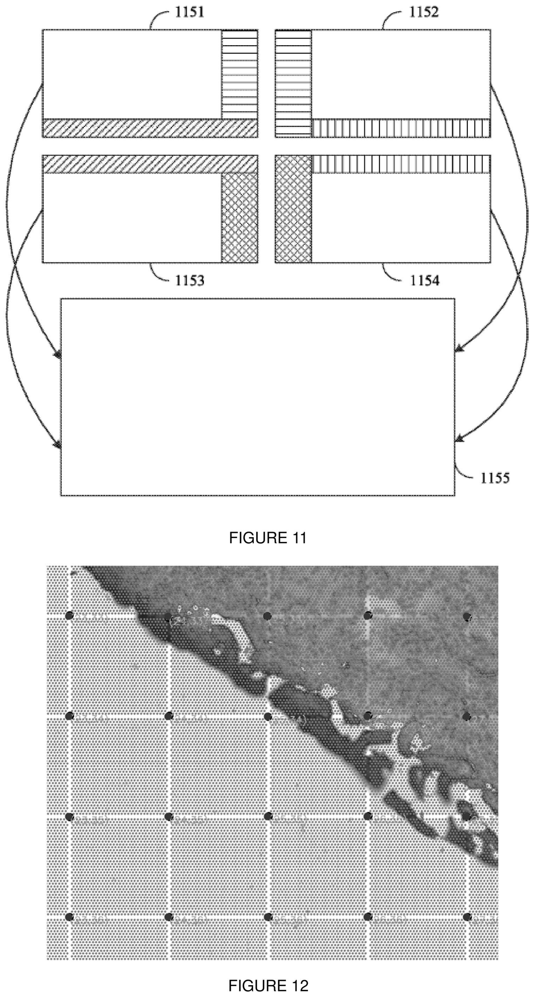

The fusion process can be seen in Figure 11.

Figure 11 is a schematic diagram of fusion processing according to an embodiment of the present application. As shown in Figure 11, a fusion process of 4 field-of-view scanning images is shown, and the 4 field-of-view scanning images respectively are Image 1151, Image 1152, Image 1153, and Image 1154.

The Image 1151 is adjacent to the Image 1152, and there is an overlapping region between a right side of the Image 1151 and a left side of the Image 1152; the Image 1151 is adjacent to the Image 1153, and there is an overlapping region between a lower side of the Image 1151 and an upper side of the Image 1153; the Image 1153 is adjacent to the Image 1154, and there is an overlapping region between a right side of the Image 1153 and a left side of the Image 1154; and the Image 1152 is adjacent to the Image 1154, and there is an overlapping region between a lower side of the Image 1152 and an upper side of the Image 1154. Each of the overlapping regions is shown in Figure 11.

The fusion process is a process that each of the field-of-view scanning images is fused into one image according to the overlapping regions. After fusion, original overlapping regions are merged into one region. For example, in Figure 11, the Image 1151, the Image 1152, the Image 1153, and the Image 1154 are fused to obtain Image 1155.

For the adjacent field-of-view scan images among the plurality of field-of-view scanning images, fusion processing can be performed with the above implementations. After fusion processing is performed on all the field-of-view scanning images, the corresponding full-size scanning image can be obtained. The field of view of the full-size scanning image is the global region of the biochip, including an intact tissue slice.

At S13, first position information of the plurality of key points in the full-size scanning image is determined according to the substrate pattern.

In a possible implementation, for the obtained full-size scanning image, the position information of the substrate pattern in the full-size scanning image can be identified, and then in combination with the positions of the plurality of key points relative to the substrate pattern, the first position information of the plurality of key points in the full-size scanning image is determined.

In a possible implementation, the first position information of the plurality of key points in the full-size scanning image can also be determined by a key point identification model.

Specifically, the key point identification model corresponding to the substrate pattern is determined first. The key point identification model is obtained in advance through training based on a plurality of groups of training samples, any one of the groups of training samples includes one sample full-size scanning image and label information corresponding to the sample full-size scanning image.

The sample full-size scanning image is an image that is obtained through fusion according to the sample tissue slice scanned by the scanner, the sample tissue slice is attached to the sample biochip, and the sample biochip includes the substrate pattern, such that the sample full-size scanning image also includes the substrate pattern. The substrate pattern includes the plurality of key points, and the label information includes the position information of the plurality of key points in the sample full-size scanning image. The label information can be in the form of an image, or in the form of data, or may also include the two forms. The form of an image refers to an image that is obtained by labeling the key points in the sample full-size scanning image, and the form of data refers to the use of coordinate data to label the positions of the plurality of key points in the sample full-size scanning image.

Figure 12 is a schematic diagram of a plurality of key points according to an embodiment of the present application. As shown in Figure 12, the plurality of key points on the substrate pattern are shown. In Figure 12, the key point is an intersection point of lines, that is, a black dot in Figure 12.

Figure 12 shows the image that is obtained by labeling the sample full-size scanning image (a portion of the image). The image can be directly used as the label information of the sample full-size scanning image, or the coordinate information of the plurality of key points may also be determined based on the image obtained through labeling. The coordinate information of the plurality of key points is used as the label information of the sample full-size scanning image. The embodiments of the present application are not limited thereto.

At S14, correction processing is performed on the full-size scanning image according to the first position information and the substrate pattern, so as to obtain a target full-size scanning image as the corrected scanning image.

The first position information is the actually-determined position information of the plurality of key points in the full-size scanning image. The substrate pattern includes the plurality of key points. Various information, such as the position of the key points, the number of the key points, etc. can be determined according to the design of the substrate pattern. Correction processing is performed on the full-size scanning image based on the information of the plurality of key points fed back by the design of the substrate pattern and the first position information of the plurality of key points in the full-size scanning image, so as to obtain the target full-size scanning image. Since the target full-size scanning image is obtained by performing correction processing on the full-size scanning image based on the first position information and the substrate pattern, the target full-size scanning image is aligned with the biochip, such that the gene expression information captured by the biochip is accurately aligned with the region indicated by the full-size scanning image.

On the basis of any one of the above embodiments, the solutions of the embodiments of the present application are introduced below in detail with reference to the drawings.

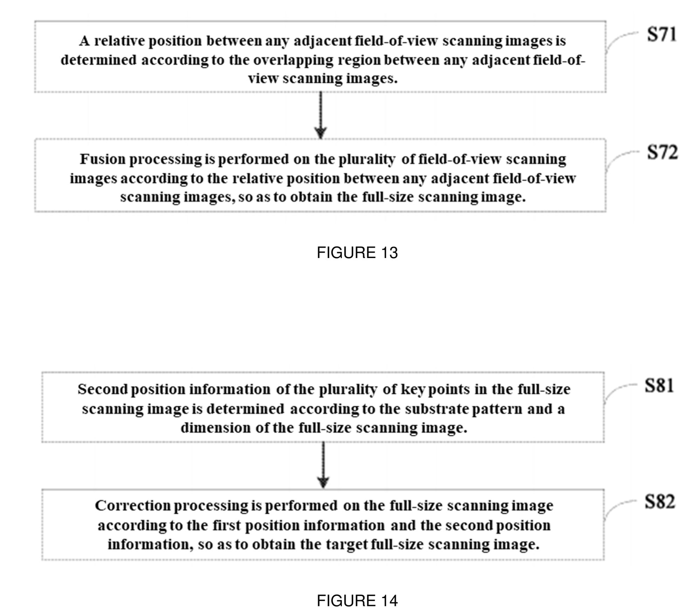

Figure 13 is a schematic flowchart of fusion processing of a field-of-view scanning image according to an embodiment of the present application. As shown in Figure 13, the following steps are included.

At S71, a relative position between any adjacent field-of-view scanning images is determined according to the overlapping region between any adjacent field-of-view scanning images.

For any first field-of-view scanning image among the plurality of field-of-view scanning images, a second field-of-view scanning image adjacent to the first field-of-view scanning image is determined first. There can be one or more second field-of-view scanning images adjacent to the first field-of-view scanning image. In a possible implementation, the second field-of-view scanning images can be all the field-of-view scanning images adjacent to the first field-of-view scanning image, or may also be a portion of the field-of-view scanning images adjacent to the first field-of-view scanning image, for example, including the field-of-view scanning images located at a left part and/or upper part of the first field-of-view scanning image, and the embodiments of the present application are not limited thereto.

After the second field-of-view scanning image is determined, two-dimensional window sliding processing is performed on the first field-of-view scanning image and the second field-of-view scanning image according to an overlapping region between the first field-of-view scanning image and the second field-of-view scanning image, and a matching parameter between the first field-of-view scanning image and the second field-of-view scanning image is determined. The matching parameter is configured to indicate an optimal matching position between the first field-of-view scanning image and the second field-of-view scanning image.

The two-dimensional window sliding processing process, for example, can be to first overlap the first field-of-view scanning image and the second field-of-view scanning image, and then slide the second field-of-view scanning image according to a preset step length such that a relative position between the first field-of-view scanning image and the second field-of-view scanning image changes. Then, portions (i.e., the overlapping region of the first field-of-view scanning image and the second field-of-view scanning image) of the first field-of-view scanning image and the second field-of-view scanning image in the same region are matched, and the similarity between the portion of the first field-of-view scanning image in the region and the portion of the second field-of-view scanning image in the region is determined. In a case where the similarity exceeds a preset threshold, the current matching position is determined as the optimal matching position between the first field-of-view scanning image and the second field-of-view scanning image. The relative position between the first field-of-view scanning image and the second field-of-view scanning image can be determined according to the current position of the first field-of-view scanning image and the position of the second field-of-view scanning image.

The relative position can be indicated in the form of relative coordinates. For example, an upper left corner of the first field-of-view scanning image can be used as a reference, a relative coordinate value of an upper left corner of the second field-of-view scanning image relative to the upper left corner of the first field-of-view scanning image is determined according to the relative position between the first field-of-view scanning image and the second field-of-view scanning image, and after the position of the first field-of-view scanning image is determined, the position of the second field-of-view scanning image can be determined based on the relative coordinate value. For example, an upper right corner of the first field-of-view scanning image can also be used as a reference, a relative coordinate value of the upper left corner of the second field-of-view scanning image relative to the upper right corner of the first field-of-view scanning image is determined according to the relative position between the first field-of-view scanning image and the second field-of-view scanning image. Alternatively, a lower left corner of the first field-of-view scanning image can also be used as a reference, a relative coordinate value of a lower left corner of the second field-of-view scanning image relative to the lower left corner of the first field-of-view scanning image is determined according to the relative position between the first field-of-view scanning image and the second field-of-view scanning image, and so on, and the embodiments of the present application are not limited thereto.

At S72, fusion processing is performed on the plurality of field-of-view scanning images according to the relative position between any adjacent field-of-view scanning images, so as to obtain the full-size scanning image.

Among the plurality of field-of-view scanning images, a position of a reference field-of-view scanning image is determined first. The reference field-of-view scanning image is any one of the plurality of field-of-view scanning images, for example, can be the 1st one, 2nd one, 3rd one, etc. among the plurality of field-of-view scanning images. The position of the reference field-of-view scanning image may also be indicated by coordinates of the reference field-of-view scanning image. The coordinates of the reference field-of-view scanning image can be represented by coordinates of a point on the reference field-of-view scanning image, for example, can be coordinates of an upper left corner, coordinates of an upper right corner, coordinates of a lower left corner, coordinates of a lower right corner, coordinates of an intermediate point, etc. of the reference field-of-view scanning image.

After the position of the reference field-of-view scanning image is determined, since the relative position between any adjacent field-of-view scanning images has already been determined, the positions of other field-of-view scanning images can be determined according to the position of the reference field-of-view scanning image and the relative position between any adjacent field-of-view scanning images, and the positions of other field-of-view scanning images may also be indicated by coordinates of other field-of-view scanning images.

In an example of using the reference field-of-view scanning image as the first one among the field-of-view scanning images, the field-of-view scanning images adjacent to the first one among the field-of-view scanning images are the second one among the field-of-view scanning images and the fifth one among the field-of-view scanning images, the second one among the field-of-view scanning images is adjacent to the third one among the field-of-view scanning images, the fifth one among the field-of-view scanning images is adjacent to the fourth one among the field-of-view scanning images and the sixth one among the field-of-view scanning images, then after absolute coordinates of the first one among the field-of-view scanning images are determined, absolute coordinates of the second one among the field-of-view scanning images can be determined according to a relative position relationship between the first one among the field-of-view scanning images and the second one among the field-of-view scanning images, and absolute coordinates of the fifth one among the field-of-view scanning images can be determined according to a relative position relationship between the first one among the field-of-view scanning images and the fifth one among the field-of-view scanning images.

Further, after the absolute coordinates of the second one among the field-of-view scanning images are determined, absolute coordinates of the third one among the field-of-view scanning images can be determined according to a relative position relationship between the second one among the field-of-view scanning images and the third one among the field-of-view scanning images; and after the absolute coordinates of the fifth one among the field-of-view scanning images is determined, absolute coordinates of the fourth one among the field-of-view scanning images can be determined according to a relative position relationship between the fifth one among the field-of-view scanning images and the fourth one among the field-of-view scanning images, and absolute coordinates of the sixth one among the field-of-view scanning images can be determined according to a relative position relationship between the fifth one among the field-of-view scanning images and the sixth one among the field-of-view scanning images. Therefore, the absolute coordinates of all the field-of-view scanning images can be determined.

To sum up, after the position of the reference field-of-view scanning image is determined, the position of each of other field-of-view scanning images can be determined in combination with the relative position between any adjacent field-of-view scanning images. Then, fusion processing is performed on the plurality of field-of-view scanning images according to the position of the reference field-of-view scanning image and the positions of other field-of-view scanning images, such that the full-size scanning image can be obtained.

After the full-size scanning image is obtained, the first position information of the plurality of key points in the full-size scanning image is determined according to the substrate pattern. For the specific implementation process, refer to relevant introduction in S13, and thus details are not described herein again.

After the first position information of the plurality of key points in the full-size scanning image is determined, correction processing is performed on the full-size scanning image according to the first position information and the substrate pattern on the biochip, so as to obtain the target full-size scanning image, which is introduced below with reference to Figure 14.

Figure 14 is a schematic flowchart of correction processing according to an embodiment of the present application. As shown in Figure 14, the following steps are included.

At S81, second position information of the plurality of key points in the full-size scanning image is determined according to the substrate pattern and a dimension of the full-size scanning image.

The first position information is the position information of the plurality of key points that is obtained by performing identification processing on the actually-obtained full-size scanning image. It is to be noted that, due to various factors such as a certain degree of distortion during scanning, errors in the fusion process, etc., there are certain errors between the obtained full-size scanning image and a theoretical full-size scanning image on the biochip, such that the first position information and the second position information are not entirely identical, which is why correction processing is required.

The second position information of the plurality of key points in the full-size scanning image can be determined according to the substrate pattern on the biochip and the dimension of the full-size scanning image. The second position information is theoretical positions of the plurality of key points in the full-size scanning image. The specific implementation process is that, processing such as zooming, etc. is performed on the full-size scanning image according to the dimension of the full-size scanning image and the dimension of the biochip, causing the dimension of the full-size scanning image to match the dimension of the biochip, and then according to the design of the substrate pattern and the degree of the processing such as zooming the full-size scanning image (can be indicated by a matrix), the second position information of the plurality of key points in the full-size scanning image is determined. For example, that the full-size scanning image needs to be subjected to processing such as zooming, etc. is determined according to the dimension of the full-size scanning image, and then the image matching the biochip can be obtained. The processed full-size scanning image is recorded as Image A. Assuming that there is one key point at Point B of the biochip according to the design of the substrate pattern, Point C corresponding to the Image A can be determined according to a position of the Point B on the biochip, and a position of the Point C on the Image A is the same as the position of the Point B on the biochip. Since the Image A is obtained by performing processing such as zooming, etc. on the full-size scanning image, reverse processing is performed on the Image A to obtain an original full-size scanning image, such that the position of the Point C on the full-size scanning image can be determined, that is, the second position information of the key point.

At S82, correction processing is performed on the full-size scanning image according to the first position information and the second position information, so as to obtain the target full-size scanning image.

After the first position information and second position information of the plurality of key points are obtained, a correction conversion matrix can be determined based on the first position information and the second position information. The correction conversion matrix is configured to achieve conversion between the first position information and the second position information.

Then, mapping transformation processing is performed on the full-size scanning image according to the correction conversion matrix, so as to obtain the final accurate full-size scanning image. The correction conversion matrix indicates the conversion between the first position information and the second position information. The first position information is the position information of the plurality of key points that is determined according to the full-size scanning image obtained through fusion. The second position information is the theoretical position information of the plurality of key points in the full-size scanning image. The correction of the plurality of key points is realized from the first position information to the second position information. The correction conversion matrix obtained based on the first position information and the second position information represents a conversion parameter between the first position information and the second position information. Therefore, mapping transformation processing is performed on the full-size scanning image based on the correction conversion matrix, such that the correction of the full-size scanning image can be realized to obtain the corrected target full-size scanning image. Mapping transformation processing performed on the full-size scanning image based on the correction conversion matrix substantially is to multiply a pixel matrix in the full-size scanning image by the correction conversion matrix, which may include the zooming of the full-size scanning image, the translation of the full-size scanning image, etc., and the embodiments of the present application are not limited thereto.

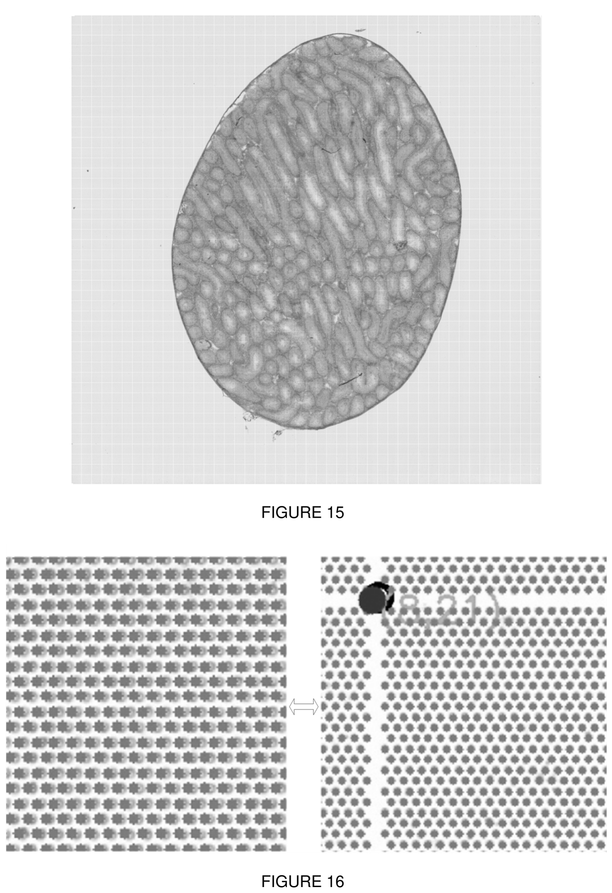

Figure 15 is a schematic diagram of a target full-size scanning image according to an embodiment of the present application. Figure 16 is a schematic enlarged view of a target full-size scanning image after a substrate pattern is superimposed according to an embodiment of the present application. As shown in Figure 15, after correction processing, the intact target full-size scanning image can be obtained. As shown in Figure 16, in order to evaluate correction accuracy, the substrate pattern of the biochip is superposed on the obtained target full-size scanning image. The left of Figure 16 shows an image that is obtained without using the scanning image correction method of the embodiments of the present application. It can be seen that, without correction, ghosting or errors exist in the image, leading to low accuracy. The right of Figure 16 shows an image that is obtained with the scanning image correction method of the embodiments of the present application. It can be seen that, in a case where correction is performed with the solution, complete overlapping is realized, and no ghosting exists, thereby achieving high accuracy.

According to the scanning image correction method provided in the embodiments of the present application, in the state where the tissue slice is attached to the biochip, the plurality of field-of-view scanning images of the biochip are collected, the biochip includes the substrate pattern, the substrate pattern includes the plurality of key points, and there is the overlapping region between any adjacent field-of-view scanning images. Then, fusion processing is performed on the plurality of field-of-view scanning images according to the overlapping region between any adjacent field-of-view scanning images, so as to obtain the full-size scanning image of the biochip, thereby realizing the stitching of the field-of-view scanning images. Further, according to the substrate pattern, the first position information of the plurality of key points in the full-size scanning image is determined, such that correction processing is performed on the full-size scanning image according to the first position information and the substrate pattern, so as to obtain the target full-size scanning image. An image error generated can be corrected through the first position information and second position information of the plurality of key points in the full-size scanning image, such that the gene expression information captured by the biochip and the region indicated by the full-size scanning image are accurately aligned, so as to meet subsequent various high-accuracy alignment requirements.

Optionally, for the correction of the fluorescence scanning image, as shown in Figure 17, S101 may include the following steps.

At S110, in a state where the tissue slice is attached to the biochip, the tissue slice is fixed with methanol, then fluorescence staining is performed on a sample, and then fluorescence scanning imaging is performed to obtain a plurality of bipartite mirror channel sub-images of the biochip and a fluorescence channel sub-image corresponding to each of the bipartite mirror channel sub-images.

The tissue slice is a slice that is manufactured based on biological tissue, for example, may be a pathological tissue slice. After the tissue slice is obtained, the tissue slice is attached to the biochip according to a professional slicing process, then a corresponding reagent is used for processing, and the tissue slice is fixed for scanning.

The biochip is an apparatus that is configured to capture gene expression information of the cell. A specific substrate pattern is carried on the biochip, and the substrate patterns on different biochips may be the same or different. The substrate pattern includes, but is not limited to, a circular array, a square array, etc.

For example, the substrate pattern on the biochip can be understood with reference to Figure 8, and thus is not described herein again.

In the embodiments of the present application, the biological barcode on the biochip is configured to capture the gene expression information of each of the cells in the tissue slice. Before the tissue slice is attached to the biochip, the biological barcode on the biochip has captured the gene expression information of each of the cells in the tissue slice.

After the tissue slice is attached to the biochip and fixed, the plurality of bipartite mirror channel sub-images of the biochip and the fluorescence channel sub-image corresponding to each of the bipartite mirror channel sub-images can be collected.

Optionally, a professional scanner that may scan a plurality of channels is used. The multi-channel professional scanner includes a plurality of spectroscopes, and one of the spectroscopes is replaced with a bipartite mirror; if the biochip is scanned based on the bipartite mirror, the corresponding bipartite mirror channel sub-image can be obtained; and if the biochip is scanned based on the spectroscope, the fluorescence channel sub-image can be obtained.

By controlling the professional scanner to scan the biochip, for each different field of view of the biochip, if the field of view is scanned by the bipartite mirror in the professional scanner, the corresponding bipartite mirror channel sub-image is obtained; and if the field of view is scanned by the spectroscope in the professional scanner, and the fields of view of this group of bipartite mirror channel sub-images and fluorescence channel sub-images are the same.

During scanning, the position of the professional scanner changes accordingly, and through the changing of the position of the professional scanner, the scanning field of view of the professional scanner changes accordingly. However, during one scanning of the professional scanner, the fields of view of the group of bipartite mirror channel sub-images and fluorescence channel sub-images obtained is the same, that is, the group of bipartite mirror channel sub-images and fluorescence channel sub-images correspond to the same region in the biochip, and since the bipartite mirror channel and the fluorescence channel are two different channels, the imaging effects are different. Fluorescence imaging belongs to passive imaging. For the tissue slice, only an illuminated portion has corresponding brightness. Since the substrate pattern on the biochip does not emit light byitself, the fluorescence channel sub-image cannot display the substrate pattern; and the bipartite mirror channel is not a passive imaging modality, the substrate pattern on the biochip can be imaged in the bipartite mirror channel, such that the substrate pattern can be displayed in the bipartite mirror channel sub-image.

The imaging effects of the bipartite mirror channel and the fluorescence channel can be understood with reference to Figure 18. Figure 18 is a comparison diagram of an efficiency effect of a bipartite mirror channel and a fluorescence channel according to an embodiment of the present application. As shown in Figure 18, an image 1831 on the left is the bipartite mirror channel sub-image that is obtained by scanning a local region on the biochip, and an image 1832 on the right is the fluorescence channel sub-image that is obtained by scanning the local region.

The image 1831 and the image 1832 scan the same region, but the imaging effects are vastly different. The image 1831 is the bipartite mirror channel sub-image obtained by the bipartite mirror channel, it can be seen that the substrate pattern on the biochip is imaged in the image 1831, and a portion of the cell tissue can also be seen. The image 1832 is the fluorescence channel sub-image obtained by the fluorescence channel. Due to the fact that the substrate pattern cannot emit light by itself, the substrate pattern cannot be observed in the image 1832.

From Figure 18, it can also be seen that, due to the principle that the fluorescence channel is based on passive imaging, the majority of the regions after imaging is dark or black, leading to insufficient feature points in the fluorescence channel sub-image, and thus making it difficult to accurately align with the biochip.

It is to be noted that the fields of view of different bipartite mirror channel sub-images are different, the field of view of any bipartite mirror channel sub-image is one local region of the biochip, the fields of view of the plurality of bipartite mirror channel sub-images together constitute the global region of the entire biochip, and there may or may not be an overlapping region between the adjacent bipartite mirror channel sub-images. Correspondingly, the fields of view of different fluorescence channel sub-images are different, the field of view of any fluorescence channel sub-image is one local region of the biochip, the fields of view of the plurality of fluorescence channel sub-images together constitute the global region of the entire biochip, and there may or may not be an overlapping region between the adjacent fluorescence channel sub-images.

At S120, enlargement processing is performed on a substrate pattern inclued in the biochip according to scanning enlargement factors corresponding to the plurality of bipartite mirror channel sub-images, so as to obtain a full-size reference image.

Any group of bipartite mirror channel sub-images and fluorescence channel sub-images has the same dimensions, and the dimensions of different bipartite mirror channel sub-images are also the same, such that the scanning enlargement factor corresponding to the bipartite mirror channel sub-image is also the scanning enlargement factor of the fluorescence channel sub-image. The scanning enlargement factor corresponding to the bipartite mirror channel sub-image is a value that can be learned in advance, and indicates a relationship between one local region in the biochip and the dimension of the corresponding bipartite mirror channel sub-image. That is, the dimension that is obtained by enlarging the dimension of the local region by a certain factor is the dimension of the corresponding bipartite mirror channel sub-image, and the enlarged factor is the scanning enlargement factor.

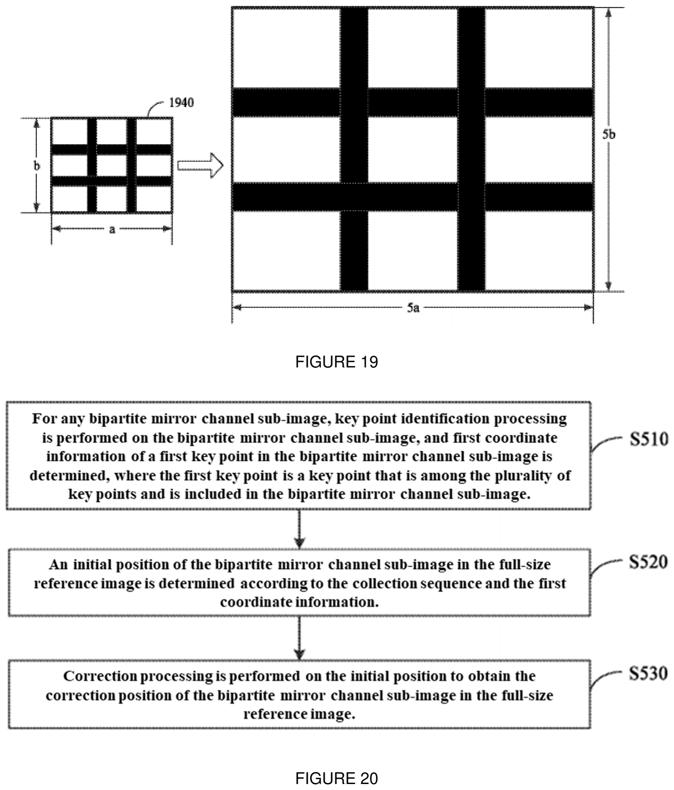

The process of enlargement processing, for example, can be understood with reference to Figure 19. Figure 19 is a schematic diagram of enlargement processing of a substrate pattern according to an embodiment of the present application. As shown in Figure 19, the biochip 1940 includes the substrate pattern; and the biochip 1940 has a length of a and a width of b.

In an example of the scanning enlargement factor being 5, the substrate pattern on the biochip 1940 is subjected to 5-fold enlargement, and then the obtained full-size reference image has the following dimension: a length of 5a and a width of 5b.

Since the scanning enlargement factor is also the enlargement factor used while the professional scanner scans different fields of view of the biochip 1940fields of view. For the local region corresponding to any one of the fields of view in the biochip 1940, the dimensions of the bipartite mirror channel sub-image and fluorescence channel sub-image obtained after the professional scanner scans the local region are also 5 times the dimension of the local region (in an example of the scanning enlargement factor being 5). Therefore, a dimension of a full-size bipartite mirror image obtained by fusing all the bipartite mirror channel sub-images obtained through scanning will be the same as the dimension of the full-size reference image, and a dimension of a full-size fluorescence image obtained by fusing all the fluorescence channel sub-images obtained through scanning shall also be the same as the dimension of the full-size reference image.

At S130, a correction position of each of the bipartite mirror channel sub-images in the full-size reference image is determined according to a collection sequence of the plurality of bipartite mirror channel sub-images and a plurality of key points included in the substrate pattern.

The collection sequence shall be a preset sequence. The corresponding collection sequence is determined for different fields of view on the biochip, such that approximate positions of the plurality of bipartite mirror channel sub-images in the full-size reference image can be roughly estimated according to the collection sequence of the plurality of bipartite mirror channel sub-images, or a relative position relationship between the plurality of bipartite mirror channel sub-images, which sub-image is adjacent to any given sub-image, etc. may also be determined. The same is applied to the fluorescence channel sub-image. For example, the preset collection sequence is to divide the fields of view of the biochip into 5 rows and 5 columns. For each row, collection is performed sequentially from left to right, and the next row is collected after one row is collected. Then, according to the collection sequence, it can be learned that the 1st-5th ones among the bipartite mirror channel sub-images are adjacent in sequence, the 6th-10th ones among the bipartite mirror channel sub-images are adjacent in sequence, the 1st and the 6th ones among the bipartite mirror channel sub-images are adjacent, etc., and the same is applied to the fluorescence channel sub-image.

The substrate pattern includes the plurality of key points, such that the full-size reference image obtained after enlargement processing is performed on the substrate pattern, also includes the plurality of key points. For any one of the bipartite mirror channel sub-images, the bipartite mirror channel sub-image shall also include at least one key point. In a possible implementation, the correction position of the bipartite mirror channel sub-image in the full-size reference image can be determined according to the matching between the key points in the bipartite mirror channel sub-image and the key points in the full-size reference image.

In a possible implementation, an initial position of the bipartite mirror channel sub-image in the full-size reference image may also be determined first, and then the correction position is obtained by correcting the initial position. The implementation is introduced below with reference to Figure 20.

Figure 20 is a schematic flowchart of determination of a correction position of a bipartite mirror channel sub-image in a full-size reference image according to an embodiment of the present application. As shown in Figure 20, the following steps are included.

At S510, for any bipartite mirror channel sub-image, key point identification processing is performed on the bipartite mirror channel sub-image, and first coordinate information of a first key point in the bipartite mirror channel sub-image is determined, where the first key point is a key point that is among the plurality of key points and is included in the bipartite mirror channel sub-image.

In a possible implementation, the first coordinate information of the first key point in the bipartite mirror channel sub-image can be identified by the key point identification model. It is to be noted that in the embodiments of the present application, how to determine the correction position of the bipartite mirror channel sub-image in the full-size reference image is introduced by way of an example of any one of the plurality of bipartite mirror channel sub-images. The method for determining the correction position of each of different bipartite mirror channel sub-images in the full-size reference image is similar, and the embodiments of the present application only use one as an example for introduction.

Specifically, the corresponding key point identification model is determined first. The key point identification model is obtained in advance through training based on the plurality of groups of training samples, and any one of the groups of training samples includes one sample bipartite mirror channel sub-image and the label information corresponding to the sample bipartite mirror channel sub-image.

The sample bipartite mirror channel sub-image is an image that is obtained according to the sample biochip scanned by the professional scanner. The sample bipartite mirror channel sub-image includes a sample key point, and the label information includes coordinate information of the sample key point in the sample bipartite mirror channel sub-image. The label information can be in the form of an image, or in the form of data, or may also include the two forms. The form of an image refers to an image that is obtained by labeling the sample key point in the sample bipartite mirror channel sub-image, and the form of data refers to the use of coordinate data to label the position of the sample key point in the sample bipartite mirror channel sub-image.

After the training of the key point identification model is completed, the key point identification model has the ability to identify the key point. The first coordinate information of the first key point in the bipartite mirror channel sub-image can be obtained by inputting the bipartite mirror channel sub-image to the key point identification model.

At S520, an initial position of the bipartite mirror channel sub-image in the full-size reference image is determined according to the collection sequence and the first coordinate information.

Specifically, second coordinate information of the position of the first key point in the bipartite mirror channel sub-image can be determined.

The above embodiments have introduced that the approximate position of the bipartite mirror channel sub-image in the full-size reference image can be approximately determined according to the collection sequence, such that the first key point in the bipartite mirror channel may also be learned. Since the substrate pattern includes all the key points, after the first key point included in the bipartite mirror channel sub-image is determined, the second coordinate information of the first key point in the full-size reference image can be determined.

Then, the initial position of the bipartite mirror channel sub-image in the full-size reference image is determined according to the first coordinate information and the second coordinate information. The first coordinate information is the coordinate information of the first key point in the bipartite mirror channel sub-image; the second coordinate information is the coordinate information of the first key point in the full-size reference image, the first coordinate information and the second coordinate information indicate the position of the first key point, and the relative position of the first key point between the two images remains unchanged., such that the initial position of the bipartite mirror channel sub-image in the full-size reference image can be determined through the first coordinate information and the second coordinate information, and the initial position is the position where coordinates indicated by the first coordinate information and the second coordinate information are the same.

At S530, correction processing is performed on the initial position to obtain the correction position of the bipartite mirror channel sub-image in the full-size reference image.

It is to be noted that due to limitations such as the mechanical accuracy of the professional scanner, the initial position determined in S520 may have certain deviations, such that correction processing needs to be performed on the initial position.

Specifically, after the initial position of the bipartite mirror channel sub-image in the full-size reference image is determined, a local sub-image corresponding to the bipartite mirror channel sub-image in the full-size reference image needs to be determined according to the initial position, the local sub-image belongs to a portion of the full-size reference image, and a condition required to be met is that a region corresponding to the local sub-image in the full-size reference image includes a region corresponding to the bipartite mirror channel sub-image in the full-size reference image. In an example where the region corresponding to the bipartite mirror channel sub-image in the full-size reference image is Region A, and the region corresponding to the local sub-image is Region B, the condition that the Region B needs to meet is that the Region A is a sub-region of the Region B.

After the local sub-image corresponding to the bipartite mirror channel sub-image is determined, the local sub-image and the bipartite mirror channel sub-image are matched to obtain a corresponding matching result.

In a possible implementation, matching processing can be performed in the manner below.

In a state where the local sub-image is kept fixed, a plurality of relative positions of the bipartite mirror channel sub-image relative to the local sub-image are determined according to a preset step length. Then, two-dimensional window sliding processing is performed on the bipartite mirror channel sub-image according to the plurality of relative positions, and the bipartite mirror channel sub-image under each of the relative positions is determined. Then, the local sub-image and the bipartite mirror channel sub-image under each of the relative positions are matched to obtain the corresponding matching result, where the matching result includes the similarity between the bipartite mirror channel sub-image and the local sub-image under each of the relative positions.

For any one of the relative positions, when the bipartite mirror channel sub-image and the local sub-image are in that relative position, the bipartite mirror channel sub-image and the local sub-image are matched to determine the similarity between the bipartite mirror channel sub-image and the local sub-image. Using the above approach, the similarity between the bipartite mirror channel sub-image and the local sub-image in different relative positions can be obtained.

After the similarity between the bipartite mirror channel sub-image and the local sub-image in different relative positions is obtained, the corresponding relative position with the highest similarity can be determined as a target relative position of the bipartite mirror channel sub-image relative to the local sub-image.

After the target relative position is obtained, the correction position of the bipartite mirror channel sub-image in the full-size reference image is obtained according to the target relative position and a position of the local sub-image in the full-size reference image. Since the position of the local sub-image in the full-size reference image has already been known, the target relative position indicates the relative position between the local sub-image and the bipartite mirror channel sub-image, and based on the target relative position and the position of the local sub-image in the full-size reference image, the correction position of the bipartite mirror channel sub-image in the full-size reference image can be determined.

The above embodiment introduces how to determine the correction position of any one of the bipartite mirror channel sub-images in the full-size reference image. For each of the bipartite mirror channel sub-images, the correction position of the bipartite mirror channel sub-image in the full-size reference image can be determined with the above approach, such that the correction positions of the bipartite mirror channel sub-images corresponding to different fields of view of the biochip in the full-size reference image are obtained.

At S140, fusion processing is performed on the fluorescence channel sub-image corresponding to each of the bipartite mirror channel sub-images according to the correction position of each of the bipartite mirror channel sub-images in the full-size reference image, so as to obtain a full-size fluorescence image of the biochip as the corrected scanning image.

The correction position of the bipartite mirror channel sub-image in the full-size reference image is an accurate position of the bipartite mirror channel sub-image in the full-size reference image. For any one of the groups of the bipartite mirror channel sub-images and their corresponding fluorescence channel sub-images, the correction position of the bipartite mirror channel sub-image in the full-size reference image is the same as the correction position of the fluorescence channel sub-image in the full-size reference image. Therefore, the correction position of each of the fluorescence channel sub-images in the full-size reference image can be determined according to the correction position of each of the bipartite mirror channel sub-images in the full-size reference image. Then, fusion processing is performed on the fluorescence channel sub-images corresponding to each of the bipartite mirror channel sub-images according to the correction position of each of the fluorescence channel sub-images in the full-size reference image, such that a full-size fluorescence image of the biochip can be obtained. The fusion process is to arrange and splice each of the fluorescence channel sub-images according to the corresponding correction position of each of the fluorescence channel sub-images in the full-size reference image.

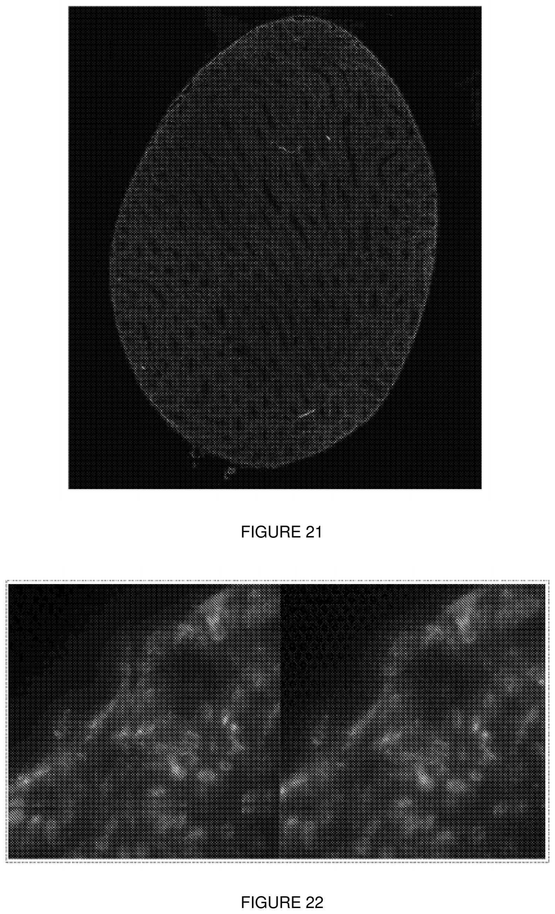

Figure 21 is a schematic diagram of a full-size fluorescence image according to an embodiment of the present application. Figure 22 is a schematic diagram of a fluorescence channel sub-image before and after fusion according to an embodiment of the present application. As shown in Figure 21, after fusion, the complete full-size fluorescence image can be obtained. As shown in Figure 22, the left side of Figure 22 shows a fluorescence channel sub-image not subjected to correction processing, and the right side of Figure 22 shows the fluorescence channel sub-image subjected to correction processing. According to the comparison of the two, it can be learned that after correction, the previous misalignment problem is corrected, thereby obtaining the full-size fluorescence image with better accuracy.

After the correction position of each of the bipartite mirror channel sub-images in the full-size reference image is determined, each of the bipartite mirror channel sub-images can also be fused, so as to obtain the full-size bipartite mirror image shown in Figure 3. The fusion process is similar to the fusion process of the fluorescence channel sub-image. It can be seen that the full-size bipartite mirror image obtained through fusion has the same content as the full-size fluorescence image in Figure 21, but has a different imaging effect.

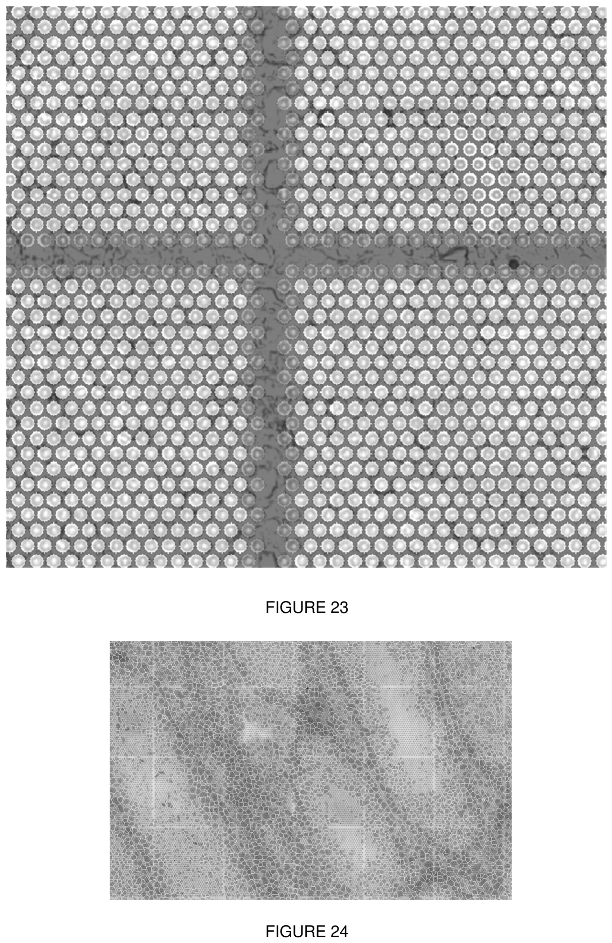

Figure 23 is a schematic enlarged view of a full-size fluorescence image after a substrate pattern is superimposed according to an embodiment of the present application. As shown in Figure 23, in order to evaluate correction accuracy, the substrate pattern of the biochip is superposed on the obtained full-size fluorescence image. Ghosting or errors occur in the full-size fluorescence image that is obtained without using the scanning image processing method of the embodiments of the present application, leading to low accuracy. The full-size fluorescence image obtained with the scanning image processing method of the embodiments of the present application completely overlaps the substrate pattern, such that no ghosting occurs, thereby achieving high accuracy.

According to the scanning image processing method provided in the embodiments of the present application, in the state where the tissue slice is attached to the biochip, the plurality of bipartite mirror channel sub-images of the biochip and the fluorescence channel sub-images corresponding to each of the bipartite mirror channel sub-images are collected, and enlargement processing is performed on the substrate pattern included in the biochip according to the scanning enlargement factors corresponding to the plurality of bipartite mirror channel sub-images, so as to obtain the full-size reference image. Then, the correction position of each of the bipartite mirror channel sub-images in the full-size reference image is determined according to the collection sequence of the plurality of bipartite mirror channel sub-images and the plurality of key points included in the substrate pattern. Finally, fusion processing is performed on the fluorescence channel sub-images corresponding to each of the bipartite mirror channel sub-images according to the correction position of each of the bipartite mirror channel sub-images in the full-size reference image, so as to obtain the full-size fluorescence image of the biochip. In a case where there is a large position deviation in the full-size fluorescence image relative to the biochip caused by insufficient feature points in the fluorescence channel sub-image, sufficient feature points, which are the plurality of key points in the substrate pattern, are captured by synchronously collecting the bipartite mirror channel sub-image corresponding to the fluorescence channel sub-image, such that the position error generated is corrected through the plurality of key points, in combination with the collection sequence of the plurality of bipartite mirror channel sub-images, and the accurate alignment of the gene expression information captured by the biochip and the region indicated by the full-size fluorescence image is realized, so as to meet subsequent various high-accuracy alignment requirements.

Optionally, a single-cell spatial transcriptome sequencing library is configured to perform clustering processing, a tissue slice is a fresh-frozen tissue slice, and the biochip is a spatial transcriptome chip.

In the embodiments of the present application, the fresh-frozen tissue slice is attached to a gene expression S1000 chip for fixation; for an animal sample, fluorescence staining of a cell nucleus is required, such as DAPI or ssDNA staining, and then bright-field staining is performed, such as HE staining, Masson staining, etc.; for a plant sample, FB28 spontaneous fluorescence-enhanced staining can be performed first, or methylamine blue or HE staining is directly performed; and after scanning is completed, the chip is placed in a holder, tissue permeabilization is performed with a well-prepared permeabilizing enzyme, then a tissue permeabilization solution is removed, a single-strand cDNA synthesis mixed solution is added for reverse transcription, after reverse transcription is completed, RNA melting is performed, then cDNA double-strand synthesis is performed, and finally, cDNA denaturation and melting for amplification, so as to obtain a sample that can be configured to construct a second-generation sequencing library.

The embodiments of the present application use the following technical solutions.
(1) Tissue fixation and staining: the frozen tissue slice is placed in -20 °C methanol and fixed for 30-60 min; then DAPI staining is performed on the animal sample, and fluorescence scanning imaging and cell nucleus fluorescence scanning are performed under irradiation from a full-spectrum light source; and then bright-field HE staining is performed, FB28 spontaneous fluorescence-enhanced staining is performed on the plant sample, or methylamine blue staining is directly performed, and scanning is performed under the bright-field light source, so as to obtain a scanning image that has not been corrected for single-cell spatial transcriptome analysis..
(2) Tissue permeabilization after scanning: the chip carrying the well-fixed and stained tissue is placed in a supporting holder, a tissue permeabilization reagent is prepared, incubation is performed according to a permeabilization time that has been determined through tissue optimization, the tissue permeabilization reagent is removed after permeabilization, and a 0.1% SSC solution is added to the well.
(3) cDNA single-strand synthesis: the 0.1% SSC solution in the well is removed, a well-prepared single-strand synthesis reagent is added to the well, and incubation is performed for 1.5 hours at 42 °C.
(4) cDNA double-strand synthesis: the single-strand synthesis reagent is removed, 0.08M KOH is added for melting denaturation, washing is performed with an EB buffer solution, then a double-strand synthesis reagent is added, and incubation is performed for 30 minutes at 65 °C.
(5) cDNA melting and amplification: the double-strand synthesis reagent is removed, washing is performed first by adding the EB buffer solution, then0.08M KOH is added for incubation for 10 min at room temperature, the KOH carrying cDNA is neutralized with a certain proportion of Tris, then 1 µl of the sample is taken for qPCR detection to determine the number of cycles, and then cDNA amplification is performed on the remaining sample with an amplification enzyme.
(6) cDNA purification: an SPRlselect magnetic bead is used to purify the amplified product, washing is performed with 80% ethanol, and elution is performed with the EB buffer solution.
(7) cDNA quantification and quality inspection: Qubit is used to perform concentration detection on the purified cDNA, 1 µL is taken to dilute to 2 ng/µL, and then length distribution detection is performed on the final cDNA with a high-sensitivity Agilent 2100 detection chip.

The following embodiments are used to illustrate the embodiments of the present application, but not to limit the scope of the embodiments of the present application. If not specifically indicated, the technical means used in the embodiments are conventional means known to those skilled in the art, and raw materials used are commercially available.

The model of the scanner used in the following embodiments is Pannoramic Scanll, which is purchased from 3D HISTECH. Under a fluorescence channel, a filter block of a scanner is removed to reserve a dichroic mirror only, a bipartite mirror is disposed, and cell nucleus fluorescence scanning and background microsphere matrix scanning can be implemented at the same time.

The chip used is an S1000 spatial transcriptome chip, which is purchased from Beijing Biomarker Technologies Co., Ltd.

### Embodiment 1 Method for construction single-cell spatial transcriptome sequencing library (animal tissue sample)

### 1. Method for staining animal tissue

### 1.1. Tissue fixation

1.1.1 40 mL of methanol was placed in a 50 mL centrifuge tube for pre-cooling to -20 °C.

1.1.2 A PCR instrument was set to 37 °C, a hot lid temperature was 37 °C or 50 °C, and an adapter was placed to balance the temperature.

1.1.3 A chip (dry ice transportation) well-attached with mouse testicular tissue (a slice thickness being 10 µm) was taken from -80 °C, the tissue faces upward and was placed on a 37 °C adapter for incubation for 1 min (do not cover the hot lid); and if the tissue was just attached in a freezing microtome, and this operation was also performed.

1.1.4 The chip was placed in the pre-cooled methanol, and incubation was performed for 30 min at -20 °C.

Reagents required for tissue staining can be prepared during this period.

### 1.2 Fluorescence staining

1.2.1 Excess methanol liquid on the well-fixed chip was cleaned, and then the chip was placed on a clean table.

1.2.2 Fluorescence staining mix was prepared according to Table 1.

**Table 1**

| Fluorescence staining mix | Volume/reaction (µL) |
|---|---|
| 5X SSC | 99.5 |
| Qubit ssDNA Reagent | 0.5 |
| Total | 100 |

1.2.3 The fluorescence staining mix was added to the tissue surface and uniformly covered, and incubation was performed in dark for 5 min.

1.2.4 The chip was tilted to suck the fluorescence staining mix.

1.2.5 100 µL of a well-prepared 0.1 × SSC buffer solution was added to the well and uniformly cover a matrix

1.2.6 The chip was tilted to suck the 0.1 × SSC buffer solution, the hold was opened, excess liquid was cleaned, and the chip can be gently waved to evaporate the excess fluid from the tissue.

### 1.3 Fluorescence scanning imaging

1.3.1 The chip was placed on a carrier rack and loaded in the instrument, and the bipartite mirror channel and an FAM channel are disposed.

1.3.2 After the system completes pre-acquisition imaging, a cursor point was placed on the tissue image for automatic focusing.

1.3.3 A folder for saving the image was selected and named.

1.3.4 A tissue position was framed, and scanning was clicked.

### 1.4. Tissue staining

1.4.1 Three 1 L beakers are prepared in advance, and all added with ultrapure water with not less than 800 mL.

1.4.2 Eosin mix was prepared according to Table 2.

**Table 2**

| Eosin mix | Volume/chip (µL) |
|---|---|
| Eosin | 100 |
| Tris-Acetic Acid buffer (0.45M, pH6.0) | 900 |
| Total | 1000 |

A hematoxylin staining solution needs to be filtered with a 0.2 µm filter membrane prior to use.

1.4.4 Isopropanol was added to the tissue surface and uniformly covered, and incubation was performed for 1 min at room temperature.

1.4.5 The chip was tilted to remove the isopropanol, excess liquid was cleaned, the chip can be gently waved to evaporate the excess fluid from the tissue, and this process did not exceed 5 min to avoid excessive drying.

1.4.6 The filtered hematoxylin staining solution was added to the tissue surface and uniformly covered, and incubation was performed for 1-7 min at room temperature (varies by tissue).

1.4.7 The chip was tilted to remove the hematoxylin staining solution, the chip was placed in the first cup of ultrapure water and gently washed for about 15 times and then was placed in the second cup of ultrapure water and gently washed for about 15 times, and the excess liquid was cleaned.

1.4.8 The indigo staining solution was added to the tissue surface and uniformly covered, and incubation was performed for 30 s-2 min at room temperature (varies by tissue).

1.4.9 The chip was tilted to remove the indigo staining solution, was placed in the second cup of ultrapure water and gently washed for about 5 times, and the excess liquid was cleaned.

1.4.10 The well-prepared eosin mix was added to the tissue surface and uniformly covered, and incubation was performed for 30 s-1 min at room temperature (varies by tissue).

1.4.11 The chip was tilted to remove the eosin mix, was placed in the third cup of ultrapure water and gently washed for about 20 times, and the excess liquid was cleaned.

1.4.12 The chip was placed in a 50 mL clean centrifuge tube for balancing and centrifugation with 250 g for 30 s.

1.4.13 The chip was taken out and placed on the 37 °C adapter for incubation for 1 min.

### 1.5 Bright-field tissue imaging

1.5.1 The chip was placed on a carrier rack and loaded in the instrument.

1.5.2 After the system completes pre-acquisition imaging, a cursor point was placed on the tissue image for automatic focusing.

1.5.3 A well-focused value was adjusted by ±50, and a folder for saving the image was selected and named.

1.5.4 A tissue position was framed, and scanning was clicked.

### 2. Tissue permeabilization

2.1 A permeabilization enzyme (i.e., 0.1% pepsin) was placed in a 37 °C metal bath for pre-heating for 10 min.

2.2 The adapter was placed in the PCR instrument, and the PCR instrument was set with the following procedures.

| Hot lid | Reaction volume |
|---|---|
| 37 °C (or 50 °C) | 100 µL |
| Temperature | Time |
| 37 °C | Hold |

2.3 The chip was mounted in a chip holder, and 70 µL of well-pre-heated Permeabilization Enzyme was added along a well side, causing the enzyme to uniformly cover the entire matrix (do not introduce air bubbles).

2.4 Sealing was performed with a sealing film, the chip was placed on the adapter in the PCR instrument, the hot lid was covered, incubation was performed at 37 °C for a well-determined time, and a timer was used for timing.

2.5 20 × SSC was diluted to 0.1 × SSC, vortex mixing was performed, and instantaneous centrifugation was performed.

2.6 The permeabilization time varies according to different tissues, and was determined by a tissue permeabilization experiment. The reaction ends, the holder was removed, the sealing film was torn, the Permeabilization Enzyme was sucked along a matrix edge, 100 µL of the above well-prepared 0.1 × SSC buffer solution was added to the well and uniformly covers the matrix (avoiding introduction of air bubbles), and sealing was performed again.

### 3. cDNA single-strand synthesis

3.1 The following cDNA single-strand synthesis mix was prepared on ice.

| Component | Volume/chip (µL) |
|---|---|
| Vazyme#R021 buffer | 8 |
| SuperScript II buffer | 8 |
| 10mM dNTPs | 4 |
| Vazyme#R301 | 4 |
| SuperScript II | 4 |
| Vazyme#R201 | 4 |
| 100mM DTT | 4 |
| Chain replacement primer | 4 (0.5OD) |
| Nuclease-Free Water | 40 |
| Total volume | 80 |

Vortex mixing was performed, and instantaneous centrifugation was performed.

3.2 The adapter was placed in the PCR instrument, and the PCR instrument was set with the following procedures.

| Hot lid | Reaction volume | |
|---|---|---|
| 50 °C | 100 µL | |
| Step | Temperature | Time |
| Pre-heating | 42 °C | Hold |
| Single-strand synthesis | 42 °C | 90 min |
| / | 4 °C | Hold |

3.3 The sealing film was torn, the buffer solution was sucked along the well side, the single-strand synthesis mix was added (uniformly covered, avoiding air bubbles), sealing was performed again, the holder was placed on the adapter, the hot lid was covered, the pre-heating step was skipped, and single-strand synthesis starts.

### 4. cDNA double-strand synthesis and denaturation

4.1 The holder was removed from the adapter, the sealing film was torn, and the single-strand synthesis mix was sucked along the well side.

4.2 100 µL of 0.08M KOH was added to the well, and incubation was performed for 5 min at room temperature.

4.3 A pipette was used to slowly suck for 5 times at a constant speed along the well side (avoid vigorous pipetting), and then the 0.08M KOH was discarded.

4.4 100 µL of the EB buffer solution was added to the well, and incubation was performed for 2 min at room temperature.

4.5 The following cDNA double-strand synthesis mix was prepared on ice.

| Component | Volume/chip (µL) |
|---|---|
| T4 DNA Ligase Reaction buffer | 8 |
| 10mM dNTPs | 1.6 |
| DNA Polymerase I | 1.6 |
| Second Strand Primer | 4 |
| Nuclease-Free Water | 64.8 |
| Total volume | 80 |

Primer sequence of Second Strand Primer: 5'-TTTCTGTTGGTGCTGATATTGC-3'.

Vortex mixing was performed, and instantaneous centrifugation was performed.

4.6 The adapter was placed in the PCR instrument, and the PCR instrument was set with the following procedures.

| Hot lid | Reaction volume | |
|---|---|---|
| 50 °C | 100 µL | |
| Step | Temperature | Time |
| Pre-heating | 65 °C | Hold |
| Double-strand synthesis | 65 °C | 30 min |
| / | 4 °C | Hold |

4.7 A pipette was used to slowly suck for 5 times at a constant speed along the well side (avoid vigorous pipetting), and then the EB buffer solution was discarded.

4.8 The cDNA double-strand synthesis mix was added to the well (avoiding air bubbles), and placed on the adapter, pre-heating was skipped, and double-strand synthesis starts.

4.9 After cDNA double-strand synthesis was completed, the double-strand synthesis mix was removed from the well.

4.10 100 µL of the EB buffer solution was added to the well, and incubation was performed for 2 min at room temperature.

4.11 A pipette was used to slowly suck for 5 times at a constant speed along the well side (avoid vigorous pipetting), and then the EB buffer solution was discarded.

4.12 45 µL of the 0.08M KOH was added to the well, it was noted that the KOH covers the entire matrix, incubation was performed for 10 min at room temperature, and the pipette was used for suction for two times every two minutes.

4.13 42 µL of the 0.08M KOH was sucked and well mixed with 6 µL of the Tris (1 M, pH 7.0) in a 0.2 mL low-adsorption tube, and the tube was placed on ice after instantaneous centrifugation.

### 5. cDNA amplification

5.1 The number of cycles for qPCR was determined.

5.1.1 The following qPCR mix was prepared on ice.

| Component | Volume/chip (µL) |
|---|---|
| Nuclease-Free Water | 12.2 |
| KAPA SYBR^{®} FAST qPCR Master Mix | 16.5 |
| 1 x cDNA Primer | 1 |

Vortex mixing was performed, and instantaneous centrifugation was performed.

5.1.2 In the qPCR well plate, 9 µL of the qPCR mix was added to each well (including 2 sample replicates and 1 negative control, a positive control may also be included, and the qPCR mix system can be scaled proportionally).

5.1.3 The sample in Step 4.13 was sucked, 1 µL of each sample replicate was added to the well, 1 µL of water was added to the negative control, for example, 1 µL of the quality-controlled cDNA sample can be added to the well for the positive control.

5.1.4 A qPCR reaction was performed according to the following procedures.

| Hot lid | Reaction volume | |
|---|---|---|
| 105 °C | 10 µL | |

| Step | Temperature | Time |
|---|---|---|
| 1 | 98 °C | 3 min |
| 2 | 98 °C | 5s |
| 3 | 63 °C | 30 s |
| 4 | 25 cycles are set in Steps 2-3 | |

5.1.5 A Cq value obtained was recorded.

### 5.2. cDNA amplification

5.2.1 The following cDNA amplification mix was prepared on ice.

| Component | Volume/chip (µL) |
|---|---|
| Amp mix | 60 |
| 4 x cDNA Primer | 1.2 |
| Total volume | 61.2 |

The Amp mix was a KAPA HiFi HotStar DNA polymerase.

The primer sequence of the cDNA Primer was as follows:
Primer F: 5'-CTACACGACGCTCTTCCGATCT-3';
Primer R: 5'-TTTCTGTTGGTGCTGATATTGC-3'.

Vortex mixing was performed, and instantaneous centrifugation was performed.

5.2.2 51 µL of the cDNA amplification mix was added to the sample in 4.13, blowing and well mixing are performed, instantaneous centrifugation was performed, and air bubbles are avoided.

5.2.3 cDNA amplification was performed by setting the following procedures to the PCR instrument.

| Hot lid | Reaction volume | |
|---|---|---|
| 105 °C | 100 µL | |

| Step | Temperature | Time |
|---|---|---|
| 1 | 95 °C | 30 s |
| 2 | 95 °C | 15 s |
| 3 | 62 °C | 15 s |
| 4 | 65 °C | 8 min |
| 5 | The number of cycles was set by rounding the Cq value obtained in 4.1.5 in Steps 2-4. | |
| 6 | 65 °C | 6 min |
| 7 | 4 °C | Hold |

5.2.4 Quality control node was provided; and concentration determination was performed on the product after PCR with Qubit.

### 6. cDNA purification

6.1 Vortex was performed on SPRlselect magnetic beads to cause the magnetic beads to be well mixed, 60 µL of the SPRIselect magnetic beads (0.6X) are added to the sample (100 µL), and the pipette was used for mixing for 15 times.

6.2 Incubation was performed for 5 min at room temperature.

6.3 The sample was placed on a magnetic rack, until the solution was clear.

### 6.4 The supernatant was removed.

6.5 200 µL of 80% ethanol was added to the tube, and the tube was allowed to stand for 30 s.

### 6.6 The ethanol was removed.

6.7 Steps 6.5 and 6.6 are repeated, and washing was performed for a total of 2 times.

6.8 The tube was subjected to instantaneous centrifugation and transferred to the magnetic rack.

6.9 Residual alcohol was removed, and drying was performed for 2 min at room temperature (do not exceed 2 min, otherwise elution efficiency was reduced).

6.10 The test tube was removed from the magnetic rack, 40.5 µL of the EB buffer solution was added, and the pipette was used for mixing for 15 times.

6.11 Incubation was performed for 2 min at room temperature.

6.12 The test tube was placed on the magnetic rack, until the solution was clear.

6.13 40 µL of the liquid was sucked to a new test tube.

6.14 The test tube was stored for 72 h at 4 °C, or stored for 4 weeks at -20 °C, or the next reaction was directly performed.

### 7. cDNA quantification and quality control

7.1 The concentration of the purified cDNA product was determined with Qubit, and was diluted to 2 ng/µL.

7.2 A peak pattern of the cDNA product was determined with High sensitivity Agilent Technologies 2100 Bioanalyzerd.

The experimental results indicate that, by constructing the single-cell spatial transcriptome sequencing library, spatial transcriptomics analysis for single-cell resolution was realized, and the mouse testicular tissue may truly reflect the distribution of various cell types on the tissue.

An original scanning image for bipartite mirror setting of the animal tissue was shown in Figure 3.

An original cell nucleus scanning image for fluorescence staining of the animal tissue was shown in Figure 21.

An original effect image for HE staining of the animal tissue was shown in Figure 15.

A cell segmentation result of a fluorescence channel of the animal tissue was shown in Figure 4.

A cell segmentation result for HE staining of the animal tissue was shown in Figure 24.

A clustering diagram after cell segmentation of the animal tissue was shown in Figure 6.

### Embodiment 2: Method for construction single-cell spatial transcriptome sequencing library (plant tissue sample)

### 1. Method for staining plant tissue (tomato callus tissue)

### 1.1. Tissue fixation

1.1.1 40 mL of methanol was placed in a 50 mL centrifuge tube for pre-cooling to -20 °C.

1.1.2 A PCR instrument was set to 37 °C, a hot lid temperature was 37 °C or 50 °C, and an adapter was placed to balance the temperature.

1.1.3 A chip (dry ice transportation) well-attached with a tissue (a slice thickness being 10 µm) was taken from -80 °C, the tissue faces upward and was placed on a 37 °C adapter for incubation for 1 min (do not cover the hot lid); and if the tissue was just attached in a freezing microtome, and this operation was also performed.

1.1.4 The chip was placed in the pre-cooled methanol, and incubation was performed for 60 min at -20 °C.

Reagents required for tissue staining can be prepared during this period.

### 1.2. Tissue staining

1.2.1 Excess methanol liquid on the well-fixed chip was cleaned, and then the chip was placed on a clean table.

1.2.2 A 0.05% toluidine blue dye was used for staining for 5-20 s.

1.2.3 Gentle washing was performed for about 5 times in ultrapure water, and the excess liquid was cleaned.

1.2.4 The chip was placed in a 50 mL clean centrifuge tube for balancing and centrifugation with 250 g for 30 s.

1.2.5 The chip was taken out and placed on the 37 °C adapter for incubation for 1 min.

### 1.3 Bright-field tissue imaging

1.3.1 The chip was placed on a carrier rack and loaded in the instrument.

1.3.2 After the system completes pre-acquisition imaging, a cursor point was placed on the tissue image for automatic focusing.

1.3.3 A well-focused value was adjusted by ±50, and a folder for saving the image was selected and named.

1.3.4 A tissue position was framed, and scanning was clicked.

### 2. Tissue permeabilization

2.1 A permeabilization enzyme (i.e., 0.1% pepsin) was placed in a 37 °C metal bath for pre-heating for 10 min.

2.2 The adapter was placed in the PCR instrument, and the PCR instrument was set with the following procedures.

| Hot lid | Reaction volume |
|---|---|
| 37 °C (or 50 °C) | 100 µL |

| Temperature | Time |
|---|---|
| 37 °C | Hold |

2.3 The chip was mounted in a chip holder, and 70 µL of well-pre-heated Permeabilization Enzyme was added along a well side, causing the enzyme to uniformly cover the entire matrix (do not introduce air bubbles).

2.4 Sealing was performed with a sealing film, the chip was placed on the adapter in the PCR instrument, the hot lid was covered, incubation was performed at 37 °C for a well-determined time, and a timer was used for timing.

2.5 20 × SSC was diluted to 0.1 × SSC, vortex mixing was performed, and instantaneous centrifugation was performed.

2.6 The permeabilization time varies according to different tissues, and was determined by a tissue permeabilization experiment. The reaction ends, the holder was removed, the sealing film was torn, the Permeabilization Enzyme was sucked along a matrix edge, 100 µL of the above well-prepared 0.1 × SSC buffer solution was added to the well and uniformly covers the matrix (avoiding introduction of air bubbles), and sealing was performed again.

### 3. cDNA single-strand synthesis

3.1 The following cDNA single-strand synthesis mix was prepared on ice.

| Component | Volume/chip (µL) |
|---|---|
| Vazyme#R021 buffer | 8 |
| SuperScript II buffer | 8 |
| 10mM dNTPs | 4 |
| Vazyme#R301 | 4 |
| SuperScript II | 4 |
| Vazyme#R201 | 4 |
| 100mM DTT | 4 |
| Chain replacement primer | 4 (0.5OD) |
| Nuclease-Free Water | 40 |
| Total volume | 80 |

Vortex mixing was performed, and instantaneous centrifugation was performed.

3.2 The adapter was placed in the PCR instrument, and the PCR instrument was set with the following procedures.

| Hot lid | Reaction volume | |
|---|---|---|
| 50 °C | 100 µL | |

| Step | Temperature | Time |
|---|---|---|
| Pre-heating | 42 °C | Hold |
| Single-strand synthesis | 42 °C | 90 min |
| / | 4 °C | Hold |

3.3 The sealing film was torn, the buffer solution was sucked along the well side, the single-strand synthesis mix was added (uniformly covered, avoiding air bubbles), sealing was performed again, the holder was placed on the adapter, the hot lid was covered, the pre-heating step was skipped, and single-strand synthesis starts.

### 4. cDNA double-strand synthesis and denaturation

4.1 The holder was removed from the adapter, the sealing film was torn, and the single-strand synthesis mix was sucked along the well side.

4.2 100 µL of 0.08M KOH was added to the well, and incubation was performed for 5 min at room temperature.

4.3 A pipette was used to slowly suck for 5 times at a constant speed along the well side (avoid vigorous pipetting), and then the 0.08M KOH was discarded.

4.4 100 µL of the EB buffer solution was added to the well, and incubation was performed for 2 min at room temperature.

4.5 The following cDNA double-strand synthesis mix was prepared on ice.

| Component | Volume/chip (µL) |
|---|---|
| T4 DNA Ligase Reaction buffer | 8 |
| 10mM dNTPs | 1.6 |
| DNA Polymerase I | 1.6 |
| Second Strand Primer | 4 |
| Nuclease-Free Water | 64.8 |
| Total volume | 80 |

Primer sequence of Second Strand Primer:5'-TTTCTGTTGGTGCTGATATTGC-3'.

Vortex mixing was performed, and instantaneous centrifugation was performed.

4.6 The adapter was placed in the PCR instrument, and the PCR instrument was set with the following procedures.

| Hot lid | Reaction volume | |
|---|---|---|
| 50 °C | 100 µL | |
| Step | Temperature | Time |
| Pre-heating | 65 °C | Hold |
| Double-strand synthesis | 65 °C | 30 min |
| / | 4 °C | Hold |

4.7 A pipette was used to slowly suck for 5 times at a constant speed along the well side (avoid vigorous pipetting), and then the EB buffer solution was discarded.

4.8 The cDNA double-strand synthesis mix was added to the well (avoiding air bubbles), and placed on the adapter, pre-heating was skipped, and double-strand synthesis starts.

4.9 After cDNA double-strand synthesis was completed, the double-strand synthesis mix was removed from the well.

4.10 100 µL of the EB buffer solution was added to the well, and incubation was performed for 2 min at room temperature.

4.11 A pipette was used to slowly suck for 5 times at a constant speed along the well side (avoid vigorous pipetting), and then the EB buffer solution was discarded.

4.12 45 µL of the 0.08M KOH was added to the well, it was noted that the KOH covers the entire matrix, incubation was performed for 10 min at room temperature, and the pipette was used for suction for two times every two minutes.

4.13 42 µL of the 0.08M KOH was sucked and well mixed with 6 µL of the Tris (1 M, pH 7.0) in a 0.2 mL low-adsorption tube, and the tube was placed on ice after instantaneous centrifugation.

### 5. cDNA amplification

5.1 The number of cycles for qPCR was determined.

5.1.1 The following qPCR mix was prepared on ice.

| Component | Volume/chip (µL) |
|---|---|
| Nuclease-Free Water | 12.2 |
| KAPA SYBR^{®} FAST qPCR Master Mix | 16.5 |
| 1 x cDNA Primer | 1 |

Vortex mixing was performed, and instantaneous centrifugation was performed.

5.1.2 In the qPCR well plate, 9 µL of the qPCR mix was added to each well (including 2 sample replicates and 1 negative control, a positive control may also be included, and the qPCR mix system can be scaled proportionally).

5.1.3 The sample in Step 4.13 was sucked, 1 µL of each sample replicate was added to the well, 1 µL of water was added to the negative control, for example, 1 µL of the quality-controlled cDNA sample can be added to the well for the positive control.

5.1.4 A qPCR reaction was performed according to the following procedures.

| Hot lid | Reaction volume | |
|---|---|---|
| 105 °C | 10 lµL | |
| Step | Temperature | Time |
| 1 | 98 °C | 3 min |
| 2 | 98 °C | 5s |
| 3 | 63 °C | 30 s |
| 4 | 25 cycles are set in Steps 2-3 | |

5.1.5 A Cq value obtained was recorded.

### 5.2. cDNA amplification

5.2.1 The following cDNA amplification mix was prepared on ice.

| Component | Volume/chip (µL) |
|---|---|
| Amp mix | 60 |
| 4 x cDNA Primer | 1.2 |
| Total volume | 61.2 |

The Amp mix was a KAPA HiFi HotStar DNA polymerase.

The primer sequence of the cDNA Primer was as follows:
Primer F: 5'-CTACACGACGCTCTTCCGATCT-3';
Primer R: 5'-TTTCTGTTGGTGCTGATATTGC-3'.

Vortex mixing was performed, and instantaneous centrifugation was performed.

5.2.2 51 µL of the cDNA amplification mix was added to the sample in 4.13, blowing and well mixing are performed, instantaneous centrifugation was performed, and air bubbles are avoided.

5.2.3 cDNA amplification was performed by setting the following procedures to the PCR instrument.

| Hot lid | Reaction volume | |
|---|---|---|
| 105 °C | 100 µL | |
| Step | Temperature | Time |
| 1 | 95 °C | 30 s |
| 2 | 95 °C | 15 s |
| 3 | 62 °C | 15 s |
| 4 | 65 °C | 8 min |
| 5 | The number of cycles was set by rounding the Cq value obtained in 4.1.5 in Steps 2-4. | |
| 6 | 65 °C | 6 min |
| 7 | 4 °C | Hold |

5.2.4 Quality control node was provided; and concentration determination was performed on the product after PCR with Qubit.

### 6. cDNA purification

6.1 Vortex was performed on SPRlselect magnetic beads to cause the magnetic beads to be well mixed, 60 µL of the SPRIselect magnetic beads (0.6X) are added to the sample (100µL), and the pipette was used for mixing for 15 times.

6.2 Incubation was performed for 5 min at room temperature.

6.3 The sample was placed on a magnetic rack, until the solution was clear.

6.4 The supernatant was removed.

6.5 200 µL of 80% ethanol was added to the tube, and the tube was allowed to stand for 30 s.

6.6 The ethanol was removed.

6.7 Steps 6.5 and 6.6 are repeated, and washing was performed for a total of 2 times.

6.8 The tube was subjected to instantaneous centrifugation and transferred to the magnetic rack.

6.9 Residual alcohol was removed, and drying was performed for 2 min at room temperature (do not exceed 2 min, otherwise elution efficiency was reduced).

6.10 The test tube was removed from the magnetic rack, 40.5 µL of the EB buffer solution was added, and the pipette was used for mixing for 15 times.

6.11 Incubation was performed for 2 min at room temperature.

6.12 The test tube was placed on the magnetic rack, until the solution was clear.

6.13 40 µL of the liquid was sucked to a new test tube.

6.14 The test tube was stored for 72 h at 4 °C, or stored for 4 weeks at -20 °C, or the next reaction was directly performed.

### 7. cDNA quantification and quality control

7.1 The concentration of the purified cDNA product was determined with Qubit, and was diluted to 2 ng/µL.

7.2 A peak pattern of the cDNA product was determined with High sensitivity Agilent Technologies 2100 Bioanalyzerd.

The experimental results indicate that, by constructing the single-cell spatial transcriptome sequencing library, spatial transcriptomics analysis for single-cell resolution is realized, and the plant tissue may truly reflect the distribution of various cell types on the tissue.

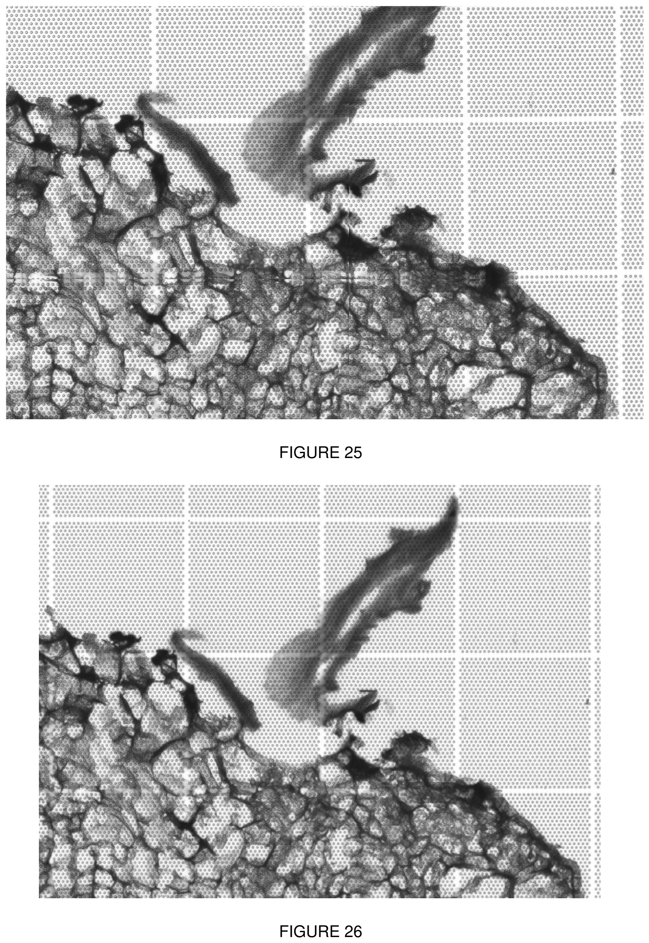

A seamless scanning effect diagram of toluidine blue staining of plant tissue is shown in Figure 25.

A splicing effect diagram of toluidine blue staining of plant tissue is shown in Figure 26.

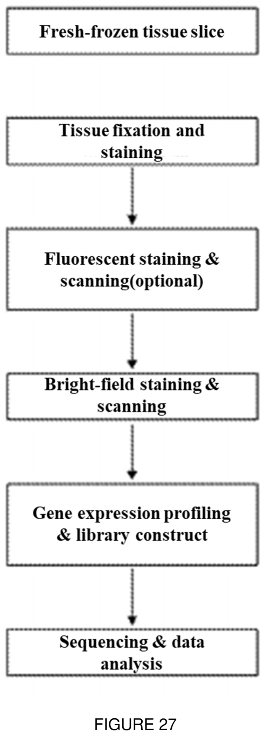

According to the method for constructing the single-cell spatial transcriptome sequencing library provided in the present application (the flow is shown in Figure 27), transcriptome analysis at a single-cell level is realized with a spatial transcriptome biochip with a specific matrixwith, in combination with the scanning solution. By using the method, the tissue sample is attached to the S1000 spatial transcriptome chip, then background matrix scanning, fluorescence scanning, and bright-field scanning are performed, the capture of spatial transcriptome information is achieved through a series of biochemical reactions, and finally, spatial transcriptome analysis at single-cell resolution of the tissue sample is realized by combining a sequencing result and a bioinformatics algorithm. Compared with traditional methods, the present application solves the problem of image splicing commonly seen in conventional scanners on the market, and more accurate single-cell level analysis can be provided in terms of spatial transcriptomics analysis. The method is mainly applied to single-cell resolution studies of spatial transcriptomics.

A cell segmentation-based single-cell spatial transcriptome analysis apparatus provided in the present application is described below, and the cell segmentation-based single-cell spatial transcriptome analysis apparatus described below and the method of analyzing cell segmentation-based single-cell spatial transcriptome described above can be correspondingly referenced to each other.

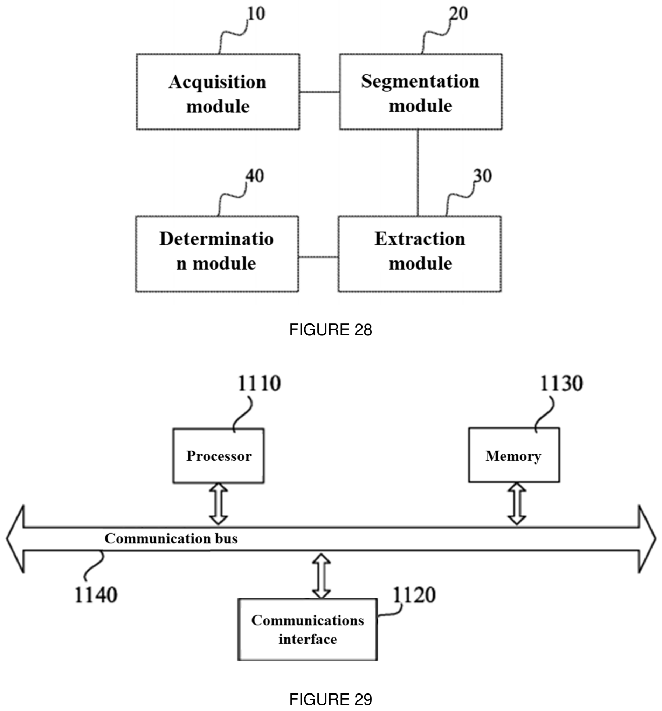

Referring to Figure 28, Figure 28 is a schematic structural diagram of a cell segmentation-based single-cell spatial transcriptome analysis apparatus according to an embodiment of the present application. As shown in Figure 28, the apparatus may include an acquisition module, a segmentation module, an extraction module, and a determination module.

The acquisition module 10 is configured to acquire a corrected scanning image, where the scanning image is obtained based on a tissue slice attached to a biochip.

The segmentation module 20 is configured to perform cell segmentation on the scanning image to obtain a cell segmentation result.

The extraction module 30 is configured to extract, based on an inherent position of each of the barcode microspheres in the biochip, position information of the barcode microsphere corresponding to each cell in the cell segmentation result.

The determination module 40 is configured to determine first position information of each of the cells and the statistical information of the corresponding barcode microsphere based on the position information of the barcode microsphere corresponding to each cell in the cell segmentation result.

Optionally, the segmentation module 20 includes a split unit, a preprocessing unit, a prediction unit, a first merging unit, a second merging unit, and an external expansion unit.

The split unit is configured to split the scanning image into a plurality of sub-images.

The preprocessing unit is configured to, for each sub-image, preprocess the sub-image to obtain a target sub-image.

The prediction unit is configured to acquire a pre-trained model matching a cell type of the tissue slice, and perform cell nucleus boundary segmentation result prediction on the target sub-image with the pre-trained model, so as to obtain the cell nucleus boundary segmentation result of each of the cell nuclei in the target sub-image.

The first merging unit is configured to merge each of the target sub-images to obtain a target image.

The second merging unit is configured to merge the cell nucleus boundary segmentation result of each of the cell nuclei in each of the target sub-images to obtain the cell nucleus boundary segmentation result of each of the cell nuclei in the target image.

The external expansion unit is configured to perform external expansion processing on the cell nucleus boundary segmentation result of each of the cell nuclei in the target image, so as to generate the cell nucleus boundary segmentation result of each cell in the target image.

Optionally, the split unit is specifically configured to perform the following operations.

The scanning image is split into a plurality of initial sub-images with a customized sliding window.

Edge boundary line fine tuning is performed on the plurality of initial sub-images to obtain the plurality of sub-images.

Optionally, the preprocessing unit is specifically configured to perform the following operation.

For each sub-image, preprocessing including equalization, dimension adjustment, color space conversion, erosion, expansion, and pixel value normalization is performed on the sub-image, so as to obtain the target sub-image.

Optionally, the external expansion unit is specifically configured to perform the following operations.

A binary image is generated based on the cell nucleus boundary segmentation result of each of the cell nuclei in the target image.

A distance map of the binary image is calculated through distance transform, where the distance map is configured to represent a distance from each pixel to the nearest cell nucleus boundary.

The distance map and a preset cell boundary threshold are processed with a watershed algorithm, so as to obtain the cell nucleus boundary segmentation result of each cell in the target image.

Optionally, the extraction module 30 is specifically configured to perform the following operations.

A center coordinate position of the barcode microsphere is calculated based on the inherent position of each barcode microsphere in the biochip.

A region of a corresponding position in cell data of the cell segmentation result is extracted based on the center coordinate position.

A circular mask is created, and the cell data in the region is multiplied by the circular mask, so as to obtain the cell data within a circular range.

The cell data within each of the circular ranges is statistically collected to obtain the position information of the barcode microsphere corresponding to each cell in the cell segmentation result.

Optionally, the apparatus further includes a visualization module. The visualization module is specifically configured to perform the following operations.

Bioinformatics analysis is performed on the position information of each of the cells and the statistical information of the corresponding barcode microspheres to obtain an expression level matrix of the cell corresponding to each piece of the position information.

Clustering processing is performed on the expression level matrices respectively corresponding to the cells, so as to obtain cell clustering information.

A corresponding color is drawn in a cell region corresponding to each clustering number in the scanning image based on clustering number of each of the cells in the cell clustering information, so as to obtain a clustering image.

Contour position information of each of the cells in the clustering image is generated by performing cell contour search on the clustering image.

Visualization display is performed on the clustering image and the contour position information of each of the cells in the clustering image.

Optionally, the acquisition module 10 includes an acquisition unit, a first processing unit, a determination unit, and a correction unit.

The acquisition unit is configured to, in a state where the tissue slice is attached to the biochip, fix the tissue slice with methanol, then perform bright-field staining on a sample, and then perform scanning imaging under a bright-field light source to obtain a plurality of field-of-view scanning images of the biochip, where the biochip includes a substrate pattern, the substrate pattern includes a plurality of key points, and an overlapping region exists between any adjacent field-of-view scanning images.

The first processing unit is configured to perform fusion processing on the plurality of field-of-view scanning images according to the overlapping region between any adjacent field-of-view scanning images, so as to obtain a full-size scanning image of the biochip.

The determination unit is configured to determine first position information of the plurality of key points in the full-size scanning image according to the substrate pattern.

The correction unit is configured to perform correction processing on the full-size scanning image according to the first position information and the substrate pattern, so as to obtain the target full-size scanning image.

Optionally, the first processing unit is specifically configured to perform the following operations.

A relative position between any adjacent field-of-view scanning images is determined according to the overlapping region between any adjacent field-of-view scanning images.

Fusion processing is performed on the plurality of field-of-view scanning images according to the relative position between any adjacent field-of-view scanning images, so as to obtain the full-size scanning image.

Optionally, the first processing unit is specifically configured to perform the following operations.

For any first field-of-view scanning image among the plurality of field-of-view scanning images, a second field-of-view scanning image adjacent to the first field-of-view scanning image is determined.

Two-dimensional window sliding processing is performed on the first field-of-view scanning image and the second field-of-view scanning image according to an overlapping region between the first field-of-view scanning image and the second field-of-view scanning image, and a matching parameter between the first field-of-view scanning image and the second field-of-view scanning image is determined.

A relative position between the first field-of-view scanning image and the second field-of-view scanning image is determined according to the matching parameter.

Optionally, the first processing unit is specifically configured to perform the following operations.

A position of a reference field-of-view scanning image is determined among the plurality of field-of-view scanning images, where the reference field-of-view scanning image is any one of the plurality of field-of-view scanning images.

Positions of other field-of-view scanning images are determined according to the position of the reference field-of-view scanning image and the relative position between any adjacent field-of-view scanning images, where other field-of-view scanning images are field-of-view scanning images among the plurality of field-of-view scanning images other than the reference field-of-view scanning image.

Fusion processing is performed on the plurality of field-of-view scanning images according to the position of the reference field-of-view scanning image and the positions of other field-of-view scanning images, so as to obtain the full-size scanning image.

Optionally, the determination unit is specifically configured to perform the following operations.

A key point identification model corresponding to the substrate pattern is determined.

The full-size scanning image is inputted to the key point identification model to obtain the first position information.

The key point identification model is obtained through training based on a plurality of groups of training samples, any one of the groups of training samples includes one sample full-size scanning image and label information corresponding to the sample full-size scanning image, the sample full-size scanning image includes the substrate pattern, and the label information includes position information of a plurality of key points in the sample full-size scanning image.

Optionally, the correction unit is specifically configured to perform the following operations.

Second position information of the plurality of key points in the full-size scanning image is determined according to the substrate pattern and a dimension of the full-size scanning image.

Correction processing is performed on the full-size scanning image according to the first position information and the second position information, so as to obtain the target full-size scanning image.

Optionally, the correction unit is specifically configured to perform the following operations.

A correction conversion matrix is determined according to the first position information and the second position information.

Mapping transformation processing is performed on the full-size scanning image according to the correction conversion matrix, so as to obtain the target full-size scanning image.

Optionally, the acquisition module 10 includes a collection unit, an enlargement unit, a second processing unit, and a fusion unit.

The collection unit is configured to, in a state where the tissue slice is attached to the biochip, fix the tissue slice with methanol, then perform fluorescence staining on a sample, and then perform fluorescence scanning imaging to obtain a plurality of bipartite mirror channel sub-images of the biochip and fluorescence channel sub-images corresponding to each of the bipartite mirror channel sub-images.

The enlargement unit is configured to perform enlargement processing on a substrate pattern incleded in the biochip according to scanning enlargement factors corresponding to the plurality of bipartite mirror channel sub-images, so as to obtain a full-size reference image.

The second processing unit is configured to determine a correction position of each of the bipartite mirror channel sub-images in the full-size reference image according to a collection sequence of the plurality of bipartite mirror channel sub-images and a plurality of key points incleded in the substrate pattern.

The fusion unit is configured to perform fusion processing on the fluorescence channel sub-image corresponding to each of the bipartite mirror channel sub-images according to the correction position of each of the bipartite mirror channel sub-images in the full-size reference image, so as to obtain a full-size fluorescence image of the biochip.

Optionally, the second processing unit is specifically configured to perform the following operations.

For any bipartite mirror channel sub-image, key point identification processing is performed on the bipartite mirror channel sub-image, and first coordinate information of a first key point in the bipartite mirror channel sub-image is determined, where the first key point is a key point that is among the plurality of key points and included in the bipartite mirror channel sub-image.

An initial position of the bipartite mirror channel sub-image in the full-size reference image is determined according to the collection sequence and the first coordinate information.

Correction processing is performed on the initial position to obtain the correction position of the bipartite mirror channel sub-image in the full-size reference image.

Optionally, the second processing unit is specifically configured to perform the following operations.

The bipartite mirror channel sub-image is inputted to a key point identification model to obtain the first coordinate information.

The key point identification model is obtained through training based on a plurality of groups of training samples, any one of the groups of training samples includes one sample bipartite mirror channel sub-image and label information corresponding to the sample bipartite mirror channel sub-image, the sample bipartite mirror channel sub-image includes a sample key point, and the label information includes coordinate information of the sample key point in the sample bipartite mirror channel sub-image.

Optionally, the second processing unit is specifically configured to perform the following operations.

Second coordinate information of the first key point in the full-size reference image is determined according to the collection sequence.

An initial position of the bipartite mirror channel sub-image in the full-size reference image is determined according to the first coordinate information and the second coordinate information.

Optionally, the second processing unit is specifically configured to perform the following operations.

A local sub-image corresponding to the bipartite mirror channel sub-image is determined from the full-size reference image according to the initial position, where a region corresponding to the local sub-image in the full-size reference image includes a region corresponding to the bipartite mirror channel sub-image in the full-size reference image.

The local sub-image and the bipartite mirror channel sub-image are matched to obtain a matching result.

The correction position of the bipartite mirror channel sub-image in the full-size reference image is obtained according to the matching result.

Optionally, the second processing unit is specifically configured to perform the following operations.

In a state where the local sub-image is in a fixed state, a plurality of relative positions of the bipartite mirror channel sub-image relative to the local sub-image are determined according to a preset step length.

Two-dimensional window sliding processing is performed on the bipartite mirror channel sub-image according to the plurality of relative positions, and the bipartite mirror channel sub-image under each of the relative positions is determined.

The local sub-image and the bipartite mirror channel sub-image under each of the relative positions are matched to obtain the matching result, where the matching result includes similarity between the bipartite mirror channel sub-image and the local sub-image under each of the relative positions.

Optionally, the second processing unit is specifically configured to perform the following operations.

The corresponding relative position with the highest similarity is determined as a target relative position of the bipartite mirror channel sub-image relative to the local sub-image.

The correction position of the bipartite mirror channel sub-image in the full-size reference image is obtained according to the target relative position and a position of the local sub-image in the full-size reference image.

It is to be noted here that the apparatus provided in this embodiment can implement all method steps that can be implemented by the above method embodiments, and can achieve the same technical effect. The same content and beneficial effects as those described in the above method embodiments are not described herein again for the apparatus embodiments.

Figure 29 is a schematic diagram of an entity structure of an electronic device. As shown in Figure 29, the electronic device may include a processor 1110, a communications interface 1120, a memory 1130, and a communication bus 1140. The processor 1110, the communications interface 1120, and the memory 1130 communicate with each other with the communication bus 1140. The processor 1110 may call logic instructions in the memory 1130 to perform the method of analyzing cell segmentation-based single-cell spatial transcriptome. The method includes: a corrected scanning image is acquired, where the scanning image is obtained based on a tissue slice attached to a biochip; cell segmentation is performed on the scanning image to obtain a cell segmentation result; position information of the barcode microsphere corresponding to each cell in the cell segmentation result is extracted based on an inherent position of each of the barcode microspheres in the biochip; and position information of each of the cells and the statistical information of the corresponding barcode microsphere are determined based on the position information of the barcode microsphere corresponding to each cell in the cell segmentation result.

In addition, the logical instructions in the memory 1130 can be implemented in the form of a software functional unit and sold or used as an independent product, and can be stored in a computer-readable storage medium. Based on this understanding, the technical solutions of the present application essentially or the parts that contribute to the prior art, or parts of the technical solutions can be embodied in the form of a software product. The computer software product is stored in a storage medium, including a plurality of instructions for causing a computer device (which may be a personal computer, a server, or a network device, and the like) to execute all or part of the steps of the method described in the various embodiments of the present application. The foregoing storage medium includes a USB flash disk, a mobile hard disk drive, a Read-Only Memory (ROM), a Random Access Memory (RAM), and various media that can store program codes, such as a magnetic disk or an optical disk.

In another aspect, the present application further provides a computer program product. The computer program product includes a computer program. The computer program can be stored in a non-transient computer readable storage medium. When the computer program is executed by a processor, the computer can perform the method of analyzing cell segmentation-based single-cell spatial transcriptome provided in the above embodiments. The method includes: a corrected scanning image is acquired, where the scanning image is obtained based on a tissue slice attached to a biochip; cell segmentation is performed on the scanning image to obtain a cell segmentation result; position information of the barcode microsphere corresponding to each cell in the cell segmentation result is extracted based on an inherent position of each of the barcode microspheres in the biochip; and position information of each of the cells and the statistical information of the corresponding barcode microsphere are determined based on the position information of the barcode microsphere corresponding to each cell in the cell segmentation result.

In yet another aspect, the present application further provides a non-transient computer readable storage medium, having a computer program stored thereon. The computer program, when executed by a processor, implements the method of analyzing cell segmentation-based single-cell spatial transcriptome provided in the above embodiments. The method includes: a corrected scanning image is acquired, where the scanning image is obtained based on a tissue slice attached to a biochip; cell segmentation is performed on the scanning image to obtain a cell segmentation result; position information of the barcode microsphere corresponding to each cell in the cell segmentation result is extracted based on an inherent position of each of the barcode microspheres in the biochip; and position information of each of the cells and the statistical information of the corresponding barcode microsphere are determined based on the position information of the barcode microsphere corresponding to each cell in the cell segmentation result.

In the embodiments provided by the present application, it is to be understood that the disclosed apparatus and method can be implemented in other ways. For example, the device embodiment described above is only schematic, and for example, division of the modules or units is only logic function division, and other division manners can be adopted during practical implementation. For another example, a plurality of units or components can be combined or integrated into another system, or some characteristics can be neglected or not executed. In addition, the displayed or discussed mutual coupling or direct coupling or communication connection can be indirect coupling or communication connection through some interfaces.

The units described as separate components may or may not be physically separated. The components displayed as units may or may not be physical units, that is, the components may be located in one place, or be distributed on the plurality of network units. Part or all of the units can be selected according to actual requirements to achieve the purposes of the solutions of these embodiments.

In addition, the functional units in the various embodiments of the present application can be integrated into one processing unit, or each unit may exist alone physically, or two or moretwo units can be integrated into one unit. The above integrated unit can be implemented in the form of a software functional unit.

If the integrated unit is implemented in the form of a software functional unit and sold or used as an independent product, it can be stored in the computer readable storage medium. Based on this understanding, all or parts of the technical solutions can be embodied in the form of a software product. The computer software product is stored in a storage medium, including a plurality of instructions for causing a computer device (which can be a personal computer, a server, or a network device, and the like) or the processor to execute all or part of the steps of the method described in the various embodiments of the present application. The computer storage medium is a non-transitory medium and includes a flash memory, a mobile hard disk drive, a Read-Only Memory (ROM), a Random Access Memory (RAM), and various media that can store program codes, such as a magnetic disk or an optical disk.

It is to be noted at last: the above various embodiments are only used to illustrate the technical solutions of the present application and not used to limit the same. Although the present application has been described in detail with reference to the foregoing embodiments, those of ordinary skill in the art can still modify the technical solutions described in the foregoing embodiments, or equivalently replace some of the technical features; all these modifications and replacements shall not cause the essence of the corresponding technical solutions to depart from the scope of the technical solutions of the embodiments of the present application.

### Industrial Applicability

The present application relates to the technical field of biological information. Provided are a method of analyzing cell segmentation-based single-cell spatial transcriptome and apparatus. The method includes: acquiring a corrected scanning image, where the scanning image is obtained based on a tissue slice attached to a biochip; performing cell segmentation on the scanning image to obtain a cell segmentation result; extracting, based on an inherent position of each barcode microsphere in the biochip, position information of the barcode microsphere corresponding to each cell in the cell segmentation result; and determining position information of each cell and the statistical information of the corresponding barcode microsphere based on the position information of the barcode microsphere corresponding to each cell in the cell segmentation result. The present application may improve the efficiency and accuracy of cell analysis, and thus have good economic value and application prospects.

## Claims

1. A method of analyzing cell segmentation-based single-cell spatial transcriptome, comprising:
acquiring a corrected scanning image, wherein the scanning image is obtained based on a tissue slice attached to a biochip;
performing cell segmentation on the scanning image and obtaining a cell segmentation result;
extracting, based on an inherent position of each of the barcode microspheres in the biochip, position information of the barcode microsphere corresponding to each cell in the cell segmentation result; and
determining position information of each of the cells and the statistical information of the corresponding barcode microsphere based on the position information of the barcode microsphere corresponding to each cell in the cell segmentation result.

2. The method according to claim 1, wherein the cell segmentation result comprises a cell nucleus boundary segmentation result and a cell boundary segmentation result; and performing cell segmentation on the scanning image and obtaining the cell segmentation result comprises:
splitting the scanning image into a plurality of sub-images;
for each sub-image, preprocessing the sub-image and obtaining a target sub-image;
acquiring a pre-trained model matching a cell type of the tissue slice, and performing cell nucleus boundary segmentation result prediction on the target sub-image with the pre-trained model, and obtaining the cell nucleus boundary segmentation result of each of the cell nuclei in the target sub-image;
merging each of the target sub-images and obtaining a target image;
merging the cell nucleus boundary segmentation result of each of the cell nuclei in each of the target sub-images and obtaining the cell nucleus boundary segmentation result of each of the cell nuclei in the target image; andperforming external expansion processing on the cell nucleus boundary segmentation result of each of the cell nuclei in the target image, and generating the cell nucleus boundary segmentation result of each cell in the target image.

3. The method according to claim 2, wherein splitting the scanning image into a plurality of sub-images comprises:
splitting the scanning image into a plurality of initial sub-images with a customized sliding window; and
performing edge boundary line fine tuning on the plurality of initial sub-images and obtaining the plurality of sub-images.

4. The method according to claim 2, wherein for each sub-image, preprocessing the sub-image and obtaining the target sub-image comprises:
for each sub-image, performing preprocessing comprising equalization, dimension adjustment, color space conversion, erosion, expansion, and pixel value normalization on the sub-image, and obtaining the target sub-image.

5. The method according to claim 2, wherein performing external expansion processing on the cell nucleus boundary segmentation result of each of the cell nuclei in the target image, and generating the cell nucleus boundary segmentation result of each cell in the target image comprises:
generating a binary image based on the cell nucleus boundary segmentation result of each of the cell nuclei in the target image;
calculating a distance map of the binary image through distance transform, wherein the distance map is configured to represent a distance from each pixel to the nearest cell nucleus boundary; and
processing the distance map and a preset cell boundary threshold with a watershed algorithm, and obtaining the cell nucleus boundary segmentation result of each cell in the target image.

6. The method according to any one of claims 1 to 5, wherein extracting, based on the inherent position of each of the barcode microspheres in the biochip, the position information of the barcode microsphere corresponding to each cell in the cell segmentation result comprises:
calculating a center coordinate position of the barcode microsphere based on the inherent position of each barcode microsphere in the biochip;
extracting, based on the center coordinate position, a region of a corresponding position in cell data of the cell segmentation result;
creating a circular mask, and multiplying the cell data in the region by the circular mask, obtaining the cell data within a circular range; and
statistically collecting the cell data within each of the circular ranges and obtaining the position information of the barcode microsphere corresponding to each cell in the cell segmentation result.

7. The method according to any one of claims 1 to 5, further comprising:
performing bioinformatics analysis on the position information of each of the cells and the the statistical information of the corresponding barcode microspheres and obtaining an expression level matrix of the cell corresponding to each piece of the position information;
performing clustering processing on the expression level matrices respectively corresponding to the cells, and obtaining cell clustering information;
drawing, based on clustering number of each of the cells in the cell clustering information, a corresponding color in a cell region corresponding to each clustering number in the scanning image, and obtaining a clustering image;
generating contour position information of each of the cells in the clustering image by performing cell contour search on the clustering image; and
performing visualization display on the clustering image and the contour position information of each of the cells in the clustering image.

8. The method according to claim 1, wherein acquiring the corrected scanning image comprises:
in a state where the tissue slice is attached to the biochip, fixing the tissue slice with methanol, then performing bright-field staining on a sample, and then performing scanning imaging under a bright-field light source and obtaining a plurality of field-of-view scanning images of the biochip, wherein the biochip comprises a substrate pattern, the substrate pattern comprises a plurality of key points, and an overlapping region exists between any adjacent field-of-view scanning images;
performing fusion processing on the plurality of field-of-view scanning images according to the overlapping region between any adjacent field-of-view scanning images, and obtaining a full-size scanning image of the biochip;
determining first position information of the plurality of key points in the full-size scanning image according to the substrate pattern; and
performing correction processing on the full-size scanning image according to the first position information and the substrate pattern, and obtaining a target full-size scanning image as the corrected scanning image.

9. The method according to claim 8, wherein performing fusion processing on the plurality of field-of-view scanning images according to the overlapping region between any adjacent field-of-view scanning images, and obtaining the full-size scanning image of the biochip comprises:
determining a relative position between any adjacent field-of-view scanning images according to the overlapping region between any adjacent field-of-view scanning images; and
performing fusion processing on the plurality of field-of-view scanning images according to the relative position between any adjacent field-of-view scanning images, obtaining the full-size scanning image.

10. The method according to claim 9, wherein determining the relative position between any adjacent field-of-view scanning images according to the overlapping region between any adjacent field-of-view scanning images comprises:
for any first field-of-view scanning image among the plurality of field-of-view scanning images, determining a second field-of-view scanning image adjacent to the first field-of-view scanning image;
performing two-dimensional window sliding processing on the first field-of-view scanning image and the second field-of-view scanning image according to an overlapping region between the first field-of-view scanning image and the second field-of-view scanning image, and determining a matching parameter between the first field-of-view scanning image and the second field-of-view scanning image; and
determining a relative position between the first field-of-view scanning image and the second field-of-view scanning image according to the matching parameter.

11. The method according to claim 9, wherein performing fusion processing on the plurality of field-of-view scanning images according to the relative position between any adjacent field-of-view scanning images, obtaining the full-size scanning image comprises:
determining a position of a reference field-of-view scanning image among the plurality of field-of-view scanning images, wherein the reference field-of-view scanning image is any one of the plurality of field-of-view scanning images;
determining positions of other field-of-view scanning images according to the position of the reference field-of-view scanning image and the relative position between any adjacent field-of-view scanning images, wherein other field-of-view scanning images are field-of-view scanning images among the plurality of field-of-view scanning images other than the reference field-of-view scanning image; and
performing fusion processing on the plurality of field-of-view scanning images according to the position of the reference field-of-view scanning image and the positions of other field-of-view scanning images, and obtaining the full-size scanning image.

12. The method according to any one of claims 8 to 11, wherein determining first position information of the plurality of key points in the full-size scanning image according to the substrate pattern comprises:
determining a key point identification model corresponding to the substrate pattern; and
inputting the full-size scanning image to the key point identification model and obtaining the first position information, wherein
the key point identification model is obtained through training based on a plurality of groups of training samples, any one of the groups of training samples comprises one sample full-size scanning image and label information corresponding to the sample full-size scanning image, the sample full-size scanning image comprises the substrate pattern, and the label information comprises position information of a plurality of key points in the sample full-size scanning image.

13. The method according to any one of claims 8 to 11, wherein performing correction processing on the full-size scanning image according to the first position information and the substrate pattern, obtaining the target full-size scanning image comprises:
determining second position information of the plurality of key points in the full-size scanning image according to the substrate pattern and a dimension of the full-size scanning image; and
performing correction processing on the full-size scanning image according to the first position information and the second position information, obtaining the target full-size scanning image.

14. The method according to claim 13, wherein performing correction processing on the full-size scanning image according to the first position information and the second position information, obtaining the target full-size scanning image comprises:
determining a correction conversion matrix according to the first position information and the second position information; and
performing mapping transformation processing on the full-size scanning image according to the correction conversion matrix, and obtaining the target full-size scanning image.

15. The method according to claim 1, wherein acquiring the corrected scanning image comprises:
in a state where the tissue slice is attached to the biochip, fixing the tissue slice with methanol, then performing fluorescence staining on a sample, and then performing fluorescence scanning imaging and obtaining a plurality of bipartite mirror channel sub-images of the biochip and a fluorescence channel sub-image corresponding to each of the bipartite mirror channel sub-images;
performing enlargement processing on a substrate pattern included in the biochip according to scanning enlargement factors corresponding to the plurality of bipartite mirror channel sub-images, obtaining a full-size reference image;
determining a correction position of each of the bipartite mirror channel sub-images in the full-size reference image according to a collection sequence of the plurality of bipartite mirror channel sub-images and a plurality of key points included in the substrate pattern; and
performing fusion processing on the fluorescence channel sub-image corresponding to each of the bipartite mirror channel sub-images according to the correction position of each of the bipartite mirror channel sub-images in the full-size reference image, and obtaining a full-size fluorescence image of the biochip as the corrected scanning image.

16. The method according to claim 15, wherein determining the correction position of each of the bipartite mirror channel sub-images in the full-size reference image according to the collection sequence of the plurality of bipartite mirror channel sub-images and the plurality of key points included in the substrate pattern comprises:
for any bipartite mirror channel sub-image, performing key point identification processing on the bipartite mirror channel sub-image, and determining first coordinate information of a first key point in the bipartite mirror channel sub-image, wherein the first key point is a key point that is among the plurality of key points and included in the bipartite mirror channel sub-image;
determining an initial position of the bipartite mirror channel sub-image in the full-size reference image according to the collection sequence and the first coordinate information; and
performing correction processing on the initial position and obtaining the correction position of the bipartite mirror channel sub-image in the full-size reference image.

17. The method according to claim 16, wherein performing key point identification processing on the bipartite mirror channel sub-image, and determining the first coordinate information of the first key point in the bipartite mirror channel sub-image comprises:
inputting the bipartite mirror channel sub-image to a key point identification model and obtaining the first coordinate information, wherein
the key point identification model is obtained through training based on a plurality of groups of training samples, any one of the groups of training samples comprises one sample bipartite mirror channel sub-image and label information corresponding to the sample bipartite mirror channel sub-image, the sample bipartite mirror channel sub-image comprises a sample key point, and the label information comprises coordinate information of the sample key point in the sample bipartite mirror channel sub-image.

18. The method according to claim 16, wherein determining the initial position of the bipartite mirror channel sub-image in the full-size reference image according to the collection sequence and the first coordinate information comprises:
determining second coordinate information of the first key point in the full-size reference image according to the collection sequence; and
determining an initial position of the bipartite mirror channel sub-image in the full-size reference image according to the first coordinate information and the second coordinate information.

19. The method according to any one of claims 16 to 18, wherein performing correction processing on the initial position and obtaining the correction position of the bipartite mirror channel sub-image in the full-size reference image comprises:
determining, according to the initial position, a local sub-image corresponding to the bipartite mirror channel sub-image from the full-size reference image, wherein a region corresponding to the local sub-image in the full-size reference image comprises a region corresponding to the bipartite mirror channel sub-image in the full-size reference image;
matching the local sub-image and the bipartite mirror channel sub-image and obtaining a matching result; and
obtaining the correction position of the bipartite mirror channel sub-image in the full-size reference image according to the matching result.

20. The method according to claim 19, wherein matching the local sub-image and the bipartite mirror channel sub-image and obtaining the matching result comprises:
in a state where the local sub-image is in a fixed state, determining, according to a preset step length, a plurality of relative positions of the bipartite mirror channel sub-image relative to the local sub-image;
performing two-dimensional window sliding processing on the bipartite mirror channel sub-image according to the plurality of relative positions, and determining the bipartite mirror channel sub-image under each of the relative positions; and
matching the local sub-image and the bipartite mirror channel sub-image under each of the relative positions and obtaining the matching result, wherein the matching result comprises similarity between the bipartite mirror channel sub-image and the local sub-image under each of the relative positions.

21. The method according to claim 20, wherein obtaining the correction position of the bipartite mirror channel sub-image in the full-size reference image according to the matching result comprises:
determining the corresponding relative position with the highest similarity as a target relative position of the bipartite mirror channel sub-image relative to the local sub-image; and
obtaining the correction position of the bipartite mirror channel sub-image in the full-size reference image according to the target relative position and a position of the local sub-image in the full-size reference image.

22. The method according to claim 7, wherein a single-cell spatial transcriptome sequencing library is configured to perform clustering processing, a tissue slice is a fresh-frozen tissue slice, and the biochip is a spatial transcriptome chip; and
the single-cell spatial transcriptome sequencing library is constructed by the following steps:
(1) attaching the fresh-frozen tissue slice to the spatial transcriptome chip, fixing the tissue slice with methanol, then performing fluorescence staining on a sample, then performing fluorescence scanning imaging, and finally performing scanning imaging under a bright-field light source, and obtaining a scanning image that is uncorrected by a single-cell spatial transcriptome;
(2) performing tissue permeabilization after scanning is completed;
(3) performing reverse transcription and cDNA single-strand synthesis;
(4) performing cDNA double-strand synthesis;
(5) performing cDNA amplification;
(6) performing cDNA purification;
(7) performing cDNA quality control; and
(8) performing loading sequencing.

23. The method according to claim 22, wherein for an animal sample, fluorescence staining is performed with DAPI or ssDNA in Step (1), and then fluorescence scanning imaging is performed; or fluorescence staining is performed with the DAPI or ssDNA, then fluorescence scanning imaging is performed, then HE staining or Masson staining is performed on the sample, and finally, scanning imaging is performed under the bright-field light source; and
for a plant sample, spontaneous fluorescence-enhanced staining is performed with a fluorescent whitening agent 28 in Step (1); or methylamine blue or HE staining is directly performed without fluorescence staining.

24. The method according to claim 22, wherein a thickness of the frozen tissue slice in Step (1) is 5-20 µm, and the attached chip is placed in -20 °C methanol and fixed for 30-60 min.

25. The method according to claim 22, wherein the attached chip in Step (1) is fixed with the methanol, then a fluorescent staining reagent is added to the sample, incubation is performed in dark for 1-20 min, and then fluorescence scanning imaging is performed under irradiation of a full-spectrum or wide-spectrum light source; and
under a fluorescence channel, a filter block of a scanner is removed to reserve a dichroic mirror only, a bipartite mirror is disposed, and cell nucleus fluorescence scanning and background microsphere matrix scanning are able to be implemented at the same time; or by disposing the filter block with certain transmittance, cell nucleus fluorescence scanning and background microsphere matrix scanning are implemented under a full-spectrum or wide-spectrum condition.

26. The method according to claim 22, wherein Step (2) comprises: putting the chip obtained in Step (1) in a tissue permeabilization solution for incubation for 1-30 min at 37 °C, removing the tissue permeabilization solution, and adding a 0.1 % SSC solution to a well of the chip.

27. The method according to claim 26, wherein Step (3) comprises: removing the SSC solution in the well, adding a reverse transcription and cDNA single-strand synthesis reagent to the well, and performing incubation for 0.5-2 hours at 37-65 °C.

28. The method according to claim 27, wherein Step (4) comprises: removing the reverse transcription and cDNA single-strand synthesis reagent in the well, adding 0.08M KOH for melting denaturation, then performing washing with an EB buffer solution, then adding a cDNA double-strand synthesis reagent, and performing incubation for 10-40 minutes at 45-70 °C.

29. The method according to claim 28, wherein Step (5) comprises: removing the cDNA double-strand synthesis reagent in the well, adding the EB buffer solution for washing, then adding the 0.08M KOH for incubation for 10 min at room temperature, then neutralizing the KOH with Tris, and then adding a cDNA amplification reagent for PCR amplification.

30. The method according to claim 29, wherein Step (6) comprises: purifying an amplification product with a magnetic bead, then washing the magnetic bead with 80% ethanol, and finally, eluting the amplification product from the magnetic bead with the **EB** buffer solution.

31. The method according to any one of claims 22 to 30, wherein the spatial transcriptome chip used carries an mRNA capture probe; and
preferably, a S1000 spatial transcriptome chip is used.

32. A cell segmentation-based single-cell spatial transcriptome analysis apparatus, comprising:
an acquisition module, configured to acquire a corrected scanning image, wherein the scanning image is obtained based on a tissue slice attached to a biochip;
a segmentation module, configured to perform cell segmentation on the scanning image and obtaining a cell segmentation result;
an extraction module, configured to extract, based on an inherent position of each of the barcode microspheres in the biochip, position information of the barcode microsphere corresponding to each cell in the cell segmentation result; and
a determination module, configured to determine first position information of each of the cells and the statistical information of the corresponding barcode microsphere based on the position information of the barcode microsphere corresponding to each cell in the cell segmentation result.

33. An electronic device, comprising a memory, a processor, and a computer program that is stored in the memory and executable on the processor, wherein the processor, when executing the program, implements steps of the method of analyzing cell segmentation-based single-cell spatial transcriptome according to any one of claims 1 to 21.

34. A non-transient computer readable storage medium, having a computer program stored thereon, wherein the computer program, when executed by a processor, implements steps of the method of analyzing cell segmentation-based single-cell spatial transcriptome according to any one of claims 1 to 21.
